# EUROPÄISCHE PATENTSCHRIFT

(11) **EP 2 799 348 B1**
(45) Veröffentlichungstag und Bekanntmachung des Hinweises auf die Patenterteilung: **01.03.2017**
(21) Anmeldenummer: 14001475.4
(22) Anmeldetag: 24.04.2014
(51) Int. Cl.: B65B 35/26, B65B 35/44, B65B 35/46, B65B 35/50, B65G 47/08, B65G 47/84, B65G 15/14, B65B 25/00

(54) **Verfahren zur Gruppierung von Artikeln zu Artikelstangen und Gruppiereinrichtung sowie Verpackungsmaschine mit einer solchen**
Method for grouping articles in article bars and grouping device and packaging machine comprising same
Procédé de regroupement d'articles en un faisceau d'articles et dispositif de regroupement et machine d'emballage doté d'un tel dispositif

(30) Priorität: 30.04.2013 DE 102013007440
(43) Veröffentlichungstag der Anmeldung: 05.11.2014
(73) Patentinhaber: THEEGARTEN-PACTEC GMBH & CO. KG, 01237 Dresden (DE)
(72) Erfinder: Bergmann, Matthias, 01217 Dresden (DE); Guido Laube, 01731 Kreischa (DE); Wilfried Seibt, 01219 Dresden (DE); Michael Sickert, 01099 Dresden (DE); Gert Wehner, 01328 Dresden (DE)
(74) Vertreter: Grünecker Patent- und Rechtsanwälte PartG mbB

(56) Entgegenhaltungen:
- EP-A1- 1 215 122
- EP-A2- 0 749 917
- DE-A1- 19 917 435
- DE-A1-102011 075 439
- GB-A- 2 342 908
- US-A1- 2006 112 662

## Beschreibung

Die vorliegende Erfindung betrifft ein Verfahren zur Bildung von Artikelstangen aus Einzelartikeln, insbesondere für Stangenpackungen sowie eine Gruppiereinrichtung, insbesondere zur Durchführung des Verfahrens. Die Erfindung betrifft ferner eine Verpackungsmaschine und eine Verpackungsmaschinenlinie mit zumindest einer solchen Gruppiereinrichtung.

Für die Verpackung kleinstückiger Gegenstände, wie zum Beispiel Süßwaren, wie Bonbons (zum Beispiel Weich- oder Hartkaramellen) ist es bekannt, diese Artikel zum Einzelverpacken durch eine auf der Grundlage eines kontinuierlichen Rotations-Transportprinzips arbeitenden Verpackungsmaschine hindurch zu bewegen und auf diese Weise die kleinstückigen Artikel einzeln zu verpacken. Bei derartigen, auf dem "kontinuierlichen Prinzip" (miteinander kämmede" Haltebackenpaare übergeben die Artikel von einem Kopf zum nächsten) insbesondere Bonbonverpackungsmaschinen können im Hochleistungsbereich mit Verpackungsgeschwindigkeiten von bis zu ca. 2000 Stück pro Minute arbeiten.

Schwierigkeiten bereitet bei derartigen Hochleistungs-Verpackungsmaschinen die gleichermaßen wirtschaftliche weitere Prozessgestaltung zum Beispiel zur Bildung von Artikelstangen, das heißt der Zusammenordnung einer Mehrzahl von einzelverpackten Artikeln, die zu einer gemeinsamen Umhüllung als Stange, zum Beispiel in einer nachgeordneten Flowpack-Verpackungsmaschine vorgesehen sind.

Ein weiteres Problem bei der Bildung und gemeinsamen Verpackung derartiger Artikelstangen aus mehren einzelverpackten Artikeln in einem sogenannten Stangenpacker besteht in der flexiblen Gruppierung beziehungsweise Bildung der Artikelstangen die auch dann stets eine vorbestimmte, im Allgemeinen konstante, stets gleiche oder jedenfalls vorbestimmte Anzahl von Einzelartikeln enthalten muss, wenn zum Beispiel fehlerhafte Artikel oder unverpackt gebliebene Artikel im Verpackungsprozess ausgesondert werden müssen, da das Erfordernis besteht, dass die als Sammelverpackung abgegebene Artikelstange keinerlei fehlerhafte Artikel enthalten darf.

Stangenpacker der vorgenannten Art sind zum Beispiel aus der EP 806 358 B1 oder EP 806 385 B1 der Anmelderin bekannt.

Ferner ist eine Artikelstangen-Bildungs- und Verpackungseinrichtung auch aus der US 2006/011 2662 A1 bekannt, bei der die Anstapelung der Artikel zu einer Artikelstange in Verbindung mit einer einzigen Tellerscheibe erfolgt, von der die Artikelstangen unter Zufütterung von Packstoff an ein Stangenverpackungsrad übergeben werden.

Eine hinreichende Flexibilisierung des Verpackungsprozesses ist mit einer derartigen Vorrichtung jedoch nicht zu erreichen.

Eine Verpackungsvorrichtung zum Verpacken streifenförmiger Gegenstände mit Gruppenbildungsvorrichtungen mit einer Sammeltrommel, die mehrere Züge aufweist, wobei jeder Zug relativ zu den weiteren Zügen der Sammeltrommel beweglich ist und die Züge eine Mehrzahl von Aufnahmeeinrichtungen oder Sammeltaschen aufweisen, zur Aufnahme jeweils eines Produktstreifens in Fächern derselben, ist aus der DE 102011 075 439 A1 bekannt.

Die Züge sind jeweils mit einem eigenen Antrieb in Form eines Elektromotors betätigt und drehen sich intermitierend gesteuert um die Achse Trommel, wobei jeder der Züge eine gewisse relative Selbstständigkeit, begrenzt durch die benachbarten Züge aufweist. Auch hierbei kann nur sehr begrenzt auf Fehlverpackungen der Einzelartikel reagiert werden.

Schließlich ist aus der DE 19917435 A1 ein Verfahren und eine Vorrichtung zum Überführen von Waren aus einem Vorratsgefäß in eine Folienbahn bekannt, wobei die Überführungseinrichtung ein erstes und ein zweites Segment zur Überführung der einzelnen Produkte in eine Längsfördereinrichtung überführt werden. Hierbei drehen sich das erste und zweite Segment um eine koaxiale Drehachse, wobei jeder der beiden Antriebswellen der Segmente eine separat regelbare Antriebseinheit zugeordnet ist.

Der Erfindung liegt daher die Aufgabe zugrunde, ein Verfahren und eine Gruppiereinrichtung zur gruppenweisen Bereitstellung von insbesondere einzelverpackten Artikeln zur Bildung von Artikelstangen aus, vorzugsweise verpackten, Einzelartikeln insbesondere Stangenpackungen anzugeben, die sich durch erhöhte Flexibilisierung und die Möglichkeit auszeichnen, die Zuordnung von fehlerhaften oder fehlerhaft verpackten Artikeln zu einer Artikelstange zu vermeiden, eine variable Länge, das heißt vorbestimmt eine variable Anzahl von Einzelartikeln in einer Artikelstange gestattet und auch hinsichtlich der Zuführung zu einer nachgeordneten, die Artikelstange verpackenden Verpackungsmaschine eine erhöhte Flexibilität aufweist.

Der Erfindung liegt ferner die Aufgabe zugrunde, eine Verpackungsmaschine mit einer derartigen Gruppiereinrichtung zur Bildung von Artikelstangen aus insbesondere verpackten Einzelartikeln sowie eine Verpackungsmaschinenlinie (Kombination mehrerer Verpackungsmaschinen) mit einer derartigen Gruppiereinrichtung anzugeben.

Die vorgenannten Aufgaben werden erfindungsgemäß durch die Ansprüche 1 und 6, ferner durch die Ansprüche 17 und 20 gelöst. Bevorzugte Ausführungsformen sind Gegenstand der Unteransprüche.

Die Erfindung zeichnet sich dadurch aus, dass sowohl der Prozess des Anstapelns, das heißt der Bildung einer Gruppe von Artikeln, vorzugsweise in kontinuierlicher Zuführung aus einem Rotationskopf (Wendekopf), in einer diesem nachgeordneten Stangenbildungseinrichtung mit hoher Flexibilität und in zeitlicher und sachlicher Hinsicht, dadurch erfolgt, dass in Abhängigkeit von einem Beginn der Bildung einer Gruppe (= Beginn der Bereitstellung einer vorbestimmten Anzahl von Einzelartikeln) und/oder in Abhängigkeit von einem Zeitraum, der zur Bereitstellung einer vorbestimmten Anzahl von Einzelartikeln (Bildung einer Artikelstange) benötigt wird oder zur Verfügung steht, unterschiedliche Stangenbildner der Stangenbildungseinrichtung zur Gruppierung der Einzelartikel zu der Artikelstange vorgesehen sind. Daher ist zwischen dem die Einzelartikel zuführenden Kopf und der nachfolgenden Gruppiereinrichtung (Artikelstangen-Bildungseinrichtung) ein flexibler, individuell artikel- oder zeitgesteuerter Zusammenhang gegeben. Dieser wird vorzugsweise dadurch bewirkt, dass individuell ansteuerbare Stangenbildner zur Bildung einer Artikelstange in der Anstapelposition verfügbar gemacht werden, sodass problemlos unterschiedliche Zeiträume für die Bildung einer Artikelstange aus einer vorbestimmten Anzahl von Einzelartikeln oder auch für die abfolgende Bildung von Artikelstangen mit einer unterschiedlichen (vorbestimmten) Anzahl von Einzelartikeln realisiert werden können (= "intelligentes Anstapeln"). Das heißt, dass nur fehlerfrei verpackte Einzelartikel zur Anstaplung in der Stangenbildungseinrichtung zugelassen werden.

In korrespondierender Anwendung dieses Prin- zips ist auch die Übergabe der zu einer Artikelstange gruppierten Einzelartikel an eine nachfolgende Artikelstange-Längsfördereinrichtung, unter Vermittlung einer entsprechenden Übergabeeinrichtung vorgesehen, die ebenfalls eine Mehrzahl von unabhängig voneinander ansteuerbaren und antreibbaren Übergabeförderern aufweist, deren Mitnehmerorgane für die Weiterförderung der von der Stangenbildungseinrichtung gebildeten Artikelstange aus einer vorbestimmten Anzahl von im allgemeinen verpackten Einzelartikeln an eine nachgeordnete Artikelstangen-Längsfördereinrichtung, die zum Beispiel zu einer Flow-Pack-Maschine zur Verpackung der Artikelstange führt, vorgesehen sind. Daher ist auch diese Schnittstelle zwischen der Artikelstangen-Bildungseinrichtung und einem Artikelstangen-Längsförderer in entsprechender Weise flexibilisiert und keinem vorfixierten Zeitmanagement unterworfen. Das heißt, sowohl die Anstapelung von Einzelartikeln einer Artikelstange als auch die Übergabe von Artikelstangen an eine Längsfördervorrichtung eines Stangenpackers (wie z. B. einer Flowpack-Maschine) erfolgen taktangepasst einerseits an die vorangehende, stromauf befindliche Einzelverpackungseinrichtung und andererseits an die nachgeordnete Artikelstangen-Zuführeinstellung eines Stangenpackers.

Auf diese Weise gelingt es, auch einen Stangenpacker in Verbindung mit einer im Hochleistungsbereich arbeitenden und auf dem kontinuierlichen Prinzip rotierender Verpackungsköpfe basierenden Einzelartikel-Verpackungsmaschine nachzuordnen, Fehlverpackungen oder Artikelfehler zu berücksichtigen, fehlerhafte Artikelstangen (Artikelstangen mit fehlerhaften Einzelartikeln) zu vermeiden und zugleich Artikelstangen in einer Sammelverpackung, zum Beispiel in einer Flow-Pack-Verpackung, mit hoher Effizienz und Lage- sowie Verpackungsgenauigkeit bereitzustellen. Zugleich kann eine Synchronisierung an ein Arbeitsverhalten (Takt) eines nachgeordneten Stangenpackers erreicht werden, da die Artikelstangen (= gruppierte Artikel) aus der Gruppiereinrichtung in variablen Abständen kontinuierlich oder intermittierend abgefördert werden können.

Vorzugsweise ist eine Fördervorrichtung als Übergabeeinrichtung mit mindestens zwei parallelen, den zu fördernden Gegenstand (Artikelstange) bewegenden Förderern vorgesehen, wobei jeder Förderer zumindest ein Paar von vorzugsweise in einem festen Abstand zueinander angeordneten Mitnehmern aufweist, zwischen denen der zu fördernde Gegenstand (Artikelstange) aufnehmbar ist, und wobei jeder Förderer mit einer separaten Antriebseinheit verbunden ist und die Antriebseinheiten unabhängig voneinander steuerbar sind, so dass die Position der Mitnehmerpaare der verschiedenen, koaxial zueinander angeordneten Förderer relativ zueinander verfahrbar bzw. verstellbar, d. h. variabel zueinander positionierbar sind. Vorzugsweise sind zwei derartige Fördervorrichtungen opponierend und unter Synchronisation zugehöriger Förderer beider Fördervorrich- tungen vorgesehen und zwar beiderseits eines Artikelstangen-Transportweges der Übergabeeinrichtung.

Für eine bestimmte Verpackungs- bzw. Stapelbildungsaufgabe (Artikelstange) mit einer vorbestimmten Anzahl von Einzelartikeln sind die Mitnehmer der Förderer bevorzugt mit einem festen Abstand voneinander angeordnet.

Die Einstellung der Mitnehmer kann hinsichtlich ihres Abstande, ihrer Größe etc. der Verpackungsaufgabe d. h. der Stapellänge angepasst und geändert werden. Die Abstände der Mitnehmer können in Abhängigkeit von Sensorsignalen, insbesondere aus dem Verpackungsprozess für die einzelnen Artikel oder eines nachgeordneten Stangenpackers oder auch der Bildung der Artikelstangen selbst, z. B. bei einer "in-situ" Veränderung der Anzahl der Artikel pro Artikelstange variabel steuerbar und einstellbar sein.

Indem die Mitnehmerpaare der verschiedenen Förderer relativ zueinander verlagerbar bzw. verstellbar sind, lassen sich variable Abstände zwischen den die zu befördernden Gegenstände (Artikelstange) aufnehmenden Mitnehmer und bzw. Mitnehmerpaaren herstellen. Diese Abstände werden durch ein Anpassen des Geschwindigkeitsverlaufes der einzelnen Förderer so eingestellt, dass durch die Fördervorrichtung ein optimaler Arbeitsverlauf mit einer möglichst hohen Verpackungsleistung erreicht wird und zwar unter maßgebender Berücksichtigung der Arbeitsgeschwindigkeit der vorgelagerten Einzelartikel-Verpackungsköpfe, wie der Möglichkeit des in der Anstapelposition befindlichen Förderers Leertakte abzuwarten und nur vollständige Artikelstangen fehlerfrei einzelverpackter Artikel weiter zu fördern. Insbesondere kann durch die mehrteilige, insbesondere mehrsträngige oder aus mehreren, unabhängigen Gruppierradsegmenten (Rädern) bestehende Komposition der Fördervorrichtung aus mehreren parallelen Förderern erreicht werden, dass immer nur einer der Förderer mit der vorgelagerten Anstapelstation, z. B. einer Station zum Einstapeln von Artikeln in ein Mitnehmerpaar im Eingriff steht, so dass die übrigen Förderer und ihre Mitnehmerpaare unabhängig arbeiten und auch mit erhöhter Fördergeschwindigkeit betrieben werden können, bzw. Förderaufgaben für bereits gebildete Artikelstapel wahrnehmen können, ohne dass ihre Bewegung von der Einstapelgeschwindigkeit in der Anstapelstation limitiert wird. Somit wird eine zeitlich unbeschränkte Entkopplung der Fördervorrichtung von den vorangehenden Prozessschritten der Verpackungsmaschine ermöglicht, da bei Fehlern in den vorgelagerten Verpackungseinheiten weiterhin über die übrigen, nicht mit der Anstapelstation im Eingriff stehenden Förderer die nachgelagerten Verpackungseinheiten über die Übergabestation und die Übergabeeinrichtung mit Produkten (Artikelstangen) weiterversorgt werden kann, so dass ein Stillstand der Fördervorrichtung oder der nachgelagerten Maschineneinheiten oder ein Einfluss von Leertakten auf die Stangenbildung (Gruppierung) vermieden werden kann. Die Fördervorrichtung bietet somit durch ihre mehrfach-parallele Ausgestaltung eine Pufferfunktion, welche einen Stillstand der Fördervorrichtung und der nachgelagerten Verpackungseinheiten oder einen Einfluss von Leertakten (kein Artikel) auf die Stangenbildung vermeidet, wobei der betreffende Förderer in der Anstapelstation einfach "warten" kann, bis die vorbestimmte Anzahl von fehlerfreien Artikeln in der Aufnahmeposition des betreffenden Förderers angestapelt (gruppiert) ist.

In einer bevorzugten Ausführungsform sind die mehreren Förderer der Fördervorrichtung jeweils als Riemen, eine Kette oder als eine rotierende Scheibe bzw. Rad ausgebildet. Die Anzahl der benachbarten Riemen, Ketten oder Scheiben bzw. Räder kann variieren, wobei jedoch immer mindestens zwei notwendig sind, um die gewünschte Veränderung der Abstände zwischen den die zu fördernden Gegenstände (Artikelstangen) aufnehmenden Mitnehmerpaaren verschiedener, benachbarter Förderer einrichten zu können.

In einer weiter bevorzugten Ausgestaltung der Erfindung sind die Mitnehmerpaare der verschiedenen Förderer eines Gruppierrades in Förderrichtung fluchtend hintereinander liegend ausgerichtet, d. h. in einer, insbesondere vertikal ausgerichtete Ebene angeordnet, so dass die zu fördernden Gegenstände (angestapelte Artikelstangen) in einer gemeinsamen übereinstimmenden Linie gefördert werden. Durch diese fluchtende Ausrichtung der Mitnehmerpaare der verschiedenen Förderer des Gruppierrades sind keine aufwendigen konstruktiven Anpassungen an der Aufnahmestation oder der Übergabestation erforderlich, da die Mitnehmerpaare der verschiedenen, unabhängig, individuell antreibbaren Förderer (z. B. Gruppierradsegmente) den zu fördernden Gegenstand (Artikelstange) immer an einer übereinstimmenden Aufnahmeposition (Anstapelposition) bilden. Die Aufnahme bzw. Übergabe der Artikel in die bzw. aus der durch ein Mitnehmerpaar gebildeten Tasche eines Förderers erfolgt somit immer auf gleiche Weise, d. h. vollkommen unabhängig davon, mit welchem der individuelle Förderer (Gruppierradsegment) das jeweilige Mitnehmerpaar verbunden ist. Mit anderen Worten arbeiten die Mitnehmer der einzelnen individuell angetriebenen Förderer der Gruppiereinrichtung stets auf die gleiche Anstapelposition zur Anstapelung der vereinzelt zugeförderten, vorzugsweise verpackten Artikel.

In noch einer weiter bevorzugten Ausführungsform sind die Mitnehmerpaare so ausgerichtet, dass sie alle oberhalb, d. h. an einer nach außen weisenden Oberseite bzw. einem Außenumfang des jeweiligen Förderers angeordnet sind. Dadurch wird eine besonders kompakte, platzsparende Bauweise der Fördervorrichtung erzielt, da für den Produkttransport nur die Breite eines der parallelen Förderer beansprucht wird, während die übrigen Förderer mit den
weiteren Mitnehmerpaaren und dem Weiter- transport einer Artikelstange zu der Übergabeeinrichtung oder der Rückkehr eines Förderers und einer seiner Taschen in die Anstapelposition bzw. eine Position benachbart zu dieser, dienen. Der zu fördernde Gegenstand (Artikelstange) erstreckt sich somit nur über die Breite eines der Förderer, wobei dieser Förderer in Übereinstimmung mit einer Förderlinie ist, entlang derer die Gegenstände (Artikelstangen) geführt werden.

Die erfindungsgemäße Gruppiereinrichtung fördert einen aus mehreren, insbesondere verpackten Einzelprodukten bestehenden Artikelstapel, wobei diese Einzelprodukte in einer Anstapelstation zwischen ein Mitnehmerpaar eines Förderers anstapelbar sind, und wobei die Geschwindigkeit des mit der Anstapelstation im Eingriff stehenden Förderers auf die Geschwindigkeit des Anstapelvorganges in der Anstapelstation synchronisierbar (taktangepasst) ist. Die Gruppiereinrichtung ist für eine stapelnde Aufnahme von Artikeln vorgesehen, wobei nur die Geschwindigkeit des jeweiligen Förderers, dessen Mitnehmerpaar sich im Arbeitseingriff mit der Anstapelstation befindet, auf die Einstapelgeschwindigkeit gedrosselt werden muss, während die weiteren Förderer unbeeinflusst vom Anstapelvorgang, d. h. mit erhöhter Fördergeschwindigkeit, die angestapelten Produkte als Artikelstange weiterführen und an nachgelagerte Maschinenteile oder Verpackungsmaschinen übergeben können. Insbesondere kann hierdurch auch eine rasche, beschleunigte Rückführbewegung eines Förderers und der zugehörigen Mitnehmer in die Anstapelposition (Aufnahmeposition) bzw. eine dieser unmittelbar benachbarten "stand-by"-Position erfolgen.

In noch einer weiteren Ausgestaltung der erfindungsgemäßen Gruppiereinrichtung ist der zu fördernde Gegenstand (Artikelstange aus in vorbestimmter Anzahl an gestapelten Einzelartikeln) an einer Übergabestation aus dem jeweiligen Mitnehmerpaar eines Förderers entnehmbar, wobei die Geschwindigkeit des mit der Übergabestation im Eingriff stehenden Förderers auf die Geschwindigkeit des Entnahmevorganges in der Übergabestation synchronisierbar ist. Durch die Verwendung mehrerer paralleler Förderstränge ist ebenfalls eine Anpassung der Geschwindigkeit desjenigen Förderers an die Geschwindigkeit des nachgelagerten Maschinenteiles (z.B. einer weiteren Mitnehmerkette o. ä.) möglich, dessen Mitnehmerpaar an der Übergabestation zur Abgabe des Gegenstandes an diesen nachgelagerten Maschinenteil bereitsteht, während die übrigen Förderer von dieser Geschwindigkeitsanpassung unbeeinflusst bleiben, so dass insbesondere auch eine Entkopplung der Taktzeiten der Anstapelstation von den Taktzeiten eines der Übergabestation nachgeordneten Stangenpackers (z. B. Flow-Pack-Maschine) ermöglicht wird.

In einer bevorzugten Ausführungsform der Erfin- dung weist die Gruppiereinrichtung als Artikelstangen-Bildungseinrichtung ein Gruppierrad auf, das eine Mehrzahl koaxialer, unabhängiger Gruppierradsegmente aufweist, wobei jedes Gruppierradsegment (hier auch als Rad bezeichnet) vorzugsweise unabhängig zu einer Rotation um eine gemeinsame Achse ansteuerbar ist und zumindest eine Tasche zur Aufnahme einer Mehrzahl von Artikeln aufweist, wobei vorzugsweise die Tasche in ihrer Länge im Wesentlichen der Länge einer Artikelstange aus einzelnen Artikeln (mit einem gewissen Übermaß der Tasche) entspricht. Vorzugsweise weisen die Gruppierradsegmente mehrere, durch Mitnehmerpaare gebildete bzw. begrenzte Taschen zur Aufnahme einer Mehrzahl von Artikeln auf, wobei zumindest im Bereich eines Anstapel- und Artikelaufnahmebereiches sowie eines Übergabebereiches zu einer Artikelübergabeeinrichtung alle Taschen bzw. artikelaufnehmende Bereiche der Gruppierradsegmente in einer gemeinsamen Rotationsebene insbesondere einer Vertikalebene angeordnet sind.

Auf diese Weise ist jedes Gruppierradsegment (Rad), vorzugsweise durch individuell zugeordnete und unabhängig ansteuerbare Servomotoren einzeln um eine gemeinsame Achse oder Nabe drehbar, sodass z. B. das mit einer Tasche in einer Artikelaufnahme-Position sich befindende Gruppierradsegment auch auf die Komplettierung einer Stapelbildung und weiterer Artikel warten kann (z. B. wenn ein Artikel als fehlerhaft vor Erreichen der Gruppiereinrichtung ausgeschleust werden muss und ein Leertakt entsteht), während die anderen Gruppierradsegmente mit der Weiterförderung eines Artikelstapels zu einer Übergabeeinrichtung oder der Abgabe an eine nachgeordnete Fördereinrichtung (z. B. zu einer Flow-Pack-Maschine) im Einsatz sind oder sich auf einer Rückkehrbewegung in die Anstapelposition befinden. Auf diese Weise ist es auch möglich, variable Abstände zwischen den aus angestapelten Artikeln gebildeten Artikelstangen einzustellen und es ist eine kontinuierliche oder diskontinuierliche Abgabe der Artikelstangen an eine nachfolgende Verpackungsmaschine oder -einrichtung möglich, wie auch ein "intelligentes Anstapeln", d. h. eine Herstellung vollständiger Artikelstangen oder Produktstapel (mit vorzugsweise immer der gleichen Artikelanzahl pro Artikelstange) und zwar auch dann, wenn in Folge von Leertakten durch Fehlprodukte im vorausgehenden Verpackungsprozess, eine zeitliche Verzögerung der Stapelbildung oder der Komplettierung eines Artikelstapels auftritt. Das heißt, die Gruppierung der Artikel "wartet" bei auftretenden Leertakten in der Einzelverpackung der Artikel
bis die gebildete Artikelstange (bestehend aus einer vorbestimmten Anzahl angestapelter Artikel) vollständig ist.

Vorzugsweise weisen in Verbindung mit einer vorbestimmten Anzahl von Artikeln, die eine Artikelstange bilden, die Mitnehmer der Förderer (hier Gruppierradsegmente) einen festen Abstand zueinander auf. Dieser kann jedoch auch in Abhängigkeit von Steuersignalen aus dem Vorprozess (Einzelverpackungsprozess) oder einem nachgeordneten Prozess (Herstellung einer Umverpackung um die Artikelstange aus angestapelten Artikeln oder aus der Gruppierung (Stapelbildung der Artikelstangen) selbst variabel sein, wenn innerhalb des Prozesses Artikelstangen oder -stapel mit einer unterschiedlichen Anzahl von Artikeln gebildet werden sollen.

Vorzugsweise weisen die Gruppierradsegmente zumindest eine Tasche zur Aufnahme eines Stapels von Artikeln auf, vorzugsweise aber diametral am Außenumfang jeweils, vorzugsweise durch Stege mit einer Nabe verbunden, zwei gegenüberliegende Taschen.

Vorzugsweise sind zumindest zwei Gruppierradsegmente vorhanden, höchst vorzugsweise aber drei oder mehr, die alle mit ihren entsprechenden Mitnehmern auf die gleiche Position der Artikelaufnahme von einer vorgeschalteten Zufuhreinrichtung, wie einen Wendekopf, arbeiten, da höchst vorzugsweise die Stangenbildung und Anstapelung der Artikel in einer Tasche eines Gruppierradsegmentes stets in der gleichen Ebene und beginnend an der gleichen Stelle erfolgt.

Insbesondere arbeiten die Taschen der Gruppierradsegmente mit einem ca. einen Viertelkreis bildenden, im ,Querschnitt U-förmigen Produktführungskanal zusammen, in dem die in den Taschen gebildeten Artikelstapel bzw. -stangen in Verbindung mit den Taschen sicher geführt werden bis zu einer Übergabestelle zur Übergabe des Artikelstapels bzw. der Artikelstange aus angestapelten einzelnen Artikeln an eine anschließende Übergabeeinrichtung.

In einer weiteren Ausführungsform der Artikelstangen-Bildungseinrichtung sind als Förderer anstelle der Gruppierradsegmente des Gruppierrades des ersten Ausführungsbeispiels drei nebeneinander angeordnete, schlaufenförmig umlaufende Riemen, insbesondere Zahnnriemen, vorgesehen, die jeweils mit drei in Förderrichtung gleichmäßig beabstandeten Mitnehmerpaaren aufweisen, wobei die Mitnehmerpaare so ausgerichtet sind, dass sie (auch) fluchtend hintereinander bezüglich einer Oberseite des mittleren der drei Riemen angeordnet sind. Die Riemen, insbesondere Zahnriemen, sind individuell durch ihnen zugeordnete Servomotoren als Antriebseinheiten unabhängig voneinander so ansteuerbar, dass während der erste Riemen mit einem seiner Mitnehmerpaare mit einer Anstapelstation zum
Anstapeln mit Artikeln zur Bildung einer Artikel- stange im Eingriff steht, der zweite Riemen mit einem seiner Mitnehmerpaare z. B. mit einer Übergabestation zur Übergabe eines Gegenstandes (Artikelstange) im Eingriff ist und/oder der dritte Riemen mit keinem seiner Mitnehmerpaare mit einer der beiden Stationen im Eingriff steht. Die Relativposition der drei Zahnriemen und damit Taschen für die Aufnahme von Artikelstangen aus angestapelten Artikeln ist vollständig flexibel und variabel zueinander. Vorzugsweise befindet sich einer der Riemen (Förderer) stets mit einer Tasche zur Aufnahme (Anstapelung) praktisch in der Anstapelposition zur Bildung einer Artikelstange (sieht man einmal von dem schnellen Wechsel zwischen der Abförderung einer kompletten, fehlerfreien Artikelstange und dem Verbringen einer Tasche zur Aufnahme von Artikeln durch die von Mitnehmern gebildete Tasche des benachbarten Riemens in die Anstapelposition ab). Diese Ausführungsform hat den Vorteil, dass ein Bewegungsablauf der Förderbewegung der Fördervorrichtung mit einer optimalen Durchsatzteistung realisierbar ist, da immer nur einer der Förderer mit der Aufnahme- bzw. Übergabestation (Anstapelposition) im Eingriff steht, während ein Förderer immer frei von jedem Eingriff ist und daher mit erhöhter Geschwindigkeit rotiert bzw. umlaufend bewegt werden kann, um die Mitnehmerpaare der anderen Förderer wieder einzuholen und so unmittelbar anschließend zur Aufnahmestation (Anstapelposition) bzw. Übergabe der Produkte in der Aufnahme- bzw. Übergabestation bereitstehen kann. Leertakte können entsprechend ausgeglichen werden, da auch hier der mit seiner Tasche in der Aufnahmeposition zur Anstapelung einer Artikelstange befindlichen Riemen "warten" kann bis die komplette Stapelbildung aus fehlerfreien Artikeln abgeschlossen ist.

Im Übrigen gelten für dieses Ausführungsbeispiel die obigen Erläuterungen hinsichtlich der Gruppierungselemente des ersten Ausführungsbeispiels sinngemäß. Vorzugsweise ist als Übergabeeinrichtung zwischen den umlaufenden Riemen (Artikelstangen-Bildungseinrichtung) und einem nachgeschalteten Längsförderer, der z. B. in Verbindung mit einem Stangenpacker (wie einer Flow-Pack-Maschine) vorgesehen ist, eine Fördereinheit die zwei gegenüberliegende Fördervorrichtungen umfasst, vorgesehen, wobei diese beiden Fördervorrichtungen derart zueinander angeordnet sind, dass die Förderer der beiden Fördervorrichtungen sich jeweils in einem einen Förderspalt bildenden Abstand gegenüberliegen und die Antriebseinheiten der einander gegenüberliegenden Förderer so zueinander synchronisiert sind, dass der zu fördernde Gegenstand jeweils zwischen einander gegenüberliegenden Mitnehmerpaaren der beiden Fördervorrichtungen aufnehmbar und im Förderspalt weiter transportierbar ist. Eine solche Fördereinheit mit einer gepaarten Anordnung von Fördervorrichtungen, deren Geschwindigkeitsprofile aufeinander synchronisiert sind, erlaubt eine besonders zuverlässige Fixierung der zu fördernden Gegenstände im Zwischenraum zwischen den gegenüberliegenden
Mitnehmerpaaren der beiden Förderer und so- mit eine zuverlässige Aufnahme, Förderung und Übergabe von Gegenständen, wie Artikelstangen aus einer Mehrzahl verpackter Einzelartikel insbesondere auch in einer waagerechten Förderrichtung. Vorzugsweise weist jede der Fördervorrichtungen eine Mehrzahl von umlaufenden, separat ansteuerbaren und koaxial angeordneten Transportbändern oder -ketten auf, jeweils mit zunächst einem, vorzugsweise mehreren beabstandeten Mitnehmern oder Mitnehmerpaaren versehen, die in vergleichbarer Weise wie die unabhängigen Elemente (Förderer) der Gruppiereinrichtung unabhängig voneinander mit Artikelstangen angestapelter Artikel in Eingriff bringbar sind.

Bei einer solchen Fördereinheit kann vorteilhafterweise im Förderspalt zusätzlich eine Gleitschiene angeordnet sein, auf der der zu fördernde Gegenstand (Artikelstapel) verschiebbar aufliegt. Die zu fördernden Artikel werden auf der Oberfläche der Gleitschiene abgestützt, so dass die Mitnehmer/Mitnehmerpaare der beiden Fördervorrichtungen lediglich eine parallel zur Gleitschiene ausgerichtete Förderkraft auf die Gegenstände (insbesondere zu Artikelstangen angestapelte Artikel) ausüben müssen.

Die Erfindung wird nachstehend anhand von zwei Ausführungsbeispielen und zugehörigen Zeichnungen näher erläutert. In diesen zeigen:
- Figur 1: eine Gruppiereinrichtung in schematischer perspektivischer Darstellung nach einem ersten Ausführungsbeispiel,
- Figur 2: eine Ansicht der Gruppiereinrichtung nach Figur 1 ohne vorgeschalteten Wendekopf zur Bereitstellung von Einzelartikeln in schematischer perspektivischer Darstellung aus Sicht eines Gruppierrades,
- Figur 3: eine Seitenansicht der Gruppiereinrichtung nach den Figuren 1 und 2,
- Figur 4: eine Einzelheit des Ausführungsbeispieles im Bereich des Gruppierrades für ein intelligentes Anstapeln von Artikeln und deren variabler Abgabe,
- Figur 5: eine vergrößerte Darstellung der Übergabeeinrichtung nach dem vorliegenden ersten Ausführungsbeispiel,
- Figur 6: eine vergrößerte Darstellung des Gruppierrades der Gruppiereinrichtung nach dem vorliegenden ersten Ausführungsbeispiel,
- Figur 7: eine Draufsicht der Gruppiereinrichtung nach dem vorliegenden, ersten Ausführungsbeispiel unter besonderer Berücksichtigung der Übergabeeinrichtung,
- Figur 8: eine schematische Perspektivan- sicht einer Baugruppe zum Anstapeln und Abgeben von Produktstangen, welche eine Fördervorrichtung und Fördereinheit umfasst, nach einem zweiten Ausführungsbeispiel der Erfindung,
- Figur 9: eine Abfolge (a) bis (c) von Verpackungs- und Gruppierungsschritten in einer Verpackungsmaschine, bei der eine Fördereinrichtung und Fördereinheit zum Einsatz gelangt, nach einem zweiten Ausführungsbeispiel der Erfindung,
- Figur 10: eine perspektivische Darstellung einer Fördervorrichtung mit einer nachgeschalteten, aus zwei Fördervorrichtungen zusammengesetzten Fördereinheit, nach einem zweiten Ausführungsbeispiel der Erfindung,
- Figur 11: Darstellung der Fördervorrichtung aus Figur 10 in einer Gesamtseitenansicht (a) und perspektivische Darstellung (b) eines Details der Fördervorrichtung aus Richtung des Pfeiles (b) in Seitenansicht (a), nach einem zweiten Ausführungsbeispiel der Erfindung,
- Figur 12: Darstellung der Fördervorrichtung aus Figur 10 in einer Gesamtseitenansicht mit verschiedenen Pfeilen zur Verdeutlichung der unterschiedlichen Geschwindigkeiten der Mitnehmerpaare, nach einem zweiten Ausführungsbeispiel der Erfindung,
- Figur 13: ein Fließschema mit dem periodisch wiederkehrenden Bewegungszyklus der Fördervorrichtung aus den Figuren 11 und 12, nach einem zweiten Ausführungsbeispiel der Erfindung,
- Figur 14: eine perspektivische Darstellung der Fördereinheit sowie der vorgeschalteten Fördervorrichtung im Bereich der Produktübergabe an diese Fördereinheit, nach einem zweiten Ausführungsbeispiel der Erfindung, und
- Figur 15: eine Draufsicht auf die Fördereinheit und die Fördervorrichtung gemäß Figur 14, nach einem zweiten Ausführungsbeispiel der Erfindung.

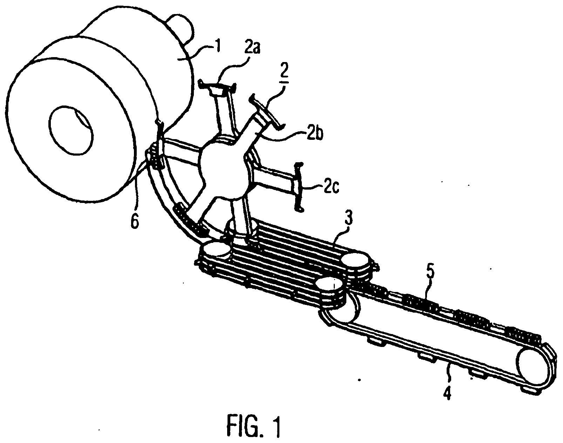

In dem nachfolgend erläuterten ersten Ausführungsbeispiel der Figuren 1 bis 7 haben die verwendeten Bezugszeichen folgende Bedeutung:
- 1: Wendekopf zum Anstapeln der Artikel (Bestandteil der nicht weiter dargestellten Verpackungsmaschine für Einzelverpackung der Artikel);
- 2: Gruppierrad (mit drei unabhängig rotierend antreibbaren Gruppierradsegmenten (Rädern) zur Aufnahme mehrerer Artikel als Stange von vorzugsweise 3 bis 16 Artikel;
- 2.01: Anstapelposition;
- 2.02: Produktführungskanal;
- 2.03: Übergabeposition zur Übergabeeinrichtung;
- 2.04: Produktstange (auch Artikelstange);
- 2.11 / 2.21 / 2.31: hinteres / mittleres / vorderes Rad (Gruppierradsegment), jedes separat angetrieben;
- 2.12 / 2.22 / 2.32: Tasche für Produktstange (Artikelstange);
- 3: Übergabeeinrichtung;
- 3.01: Aufnahmeposition für Artikelstangen aus dem Gruppierrad;
- 3.02: Produktführungskanal (Übergabeeinrichtung 3);
- 3.03: Übergabeposition zur nachgelagerten Baugruppe (Mitnehmerkette), wie Stangenpacker;
- 3.04: Produktstange (auch Artikelstange);
- 3.11 / 3.21 / 3.31: obere / mittlere / untere Mitnehmerkette der Übergabeeinrichtung 3;
- 3.12 / 3.22 / 3.32: Mitnehmerpaar der jeweiligen Mitnehmerkette;
- 4: Mitnehmerkette (Zuführung zu oder Bestandteil des nachgeordneten Stangenpackers);

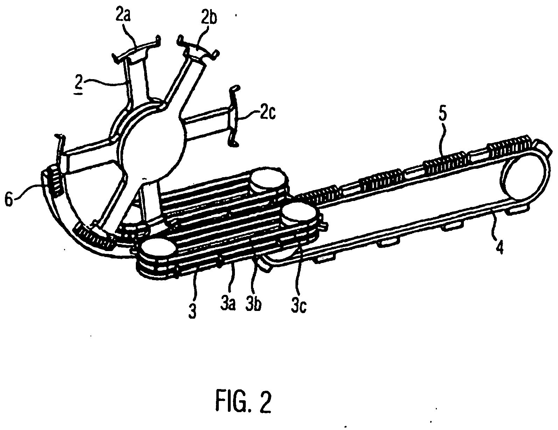

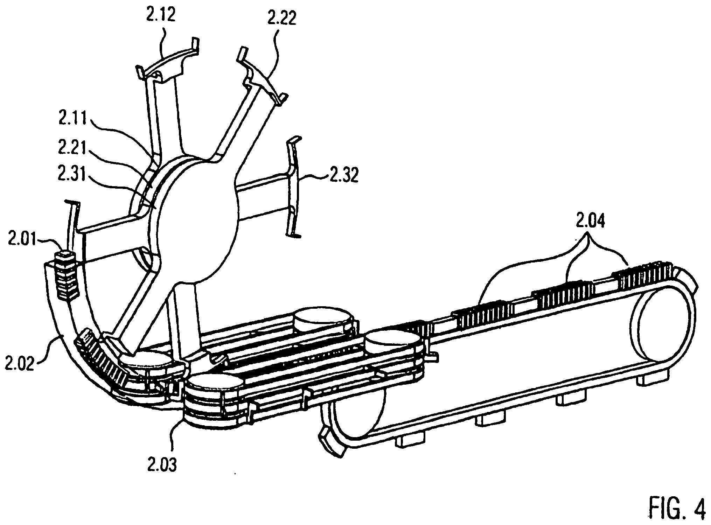

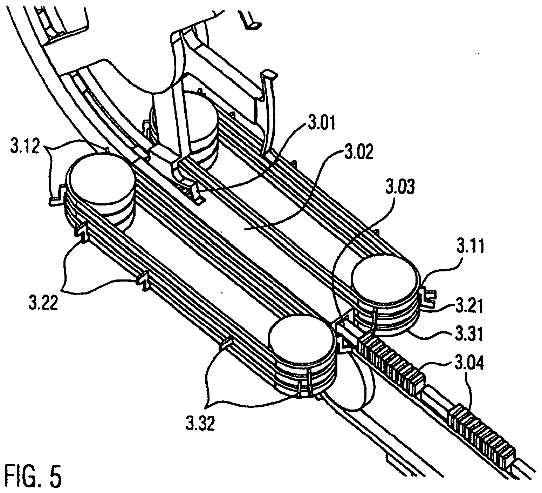

In den Figuren 1 und 2 sind die Räder 2.11, 2.21, 2.31 des Gruppierrades 2 auch mit 2a, 2b und 2c bezeichnet, die obere, mittlere und untere Mitnehmerkette 3.11, 3.21, 3.31 (Figur 5) sind in Figur 2 mit 3a, 3b und 3c bezeichnet. Eine Produkt- oder Artikelstange, 2.04 oder 3.04 (vergleiche Figur 4 und 5 ist in Figur 2 mit 5 bezeichnet und einzelne Artikel sind in Figur 1, 2 und 3 mit 6 bezeichnet.

Das erste Ausführungsbeispiel der Erfindung wird anhand der Figuren 1 bis 7 nachfolgend erläutert. Diese zeigen eine Gruppiereinrichtung zur Bildung von Artikelstangen aus einer Mehrzahl angestapelter einzelner, vorzugsweise vorher einzeln verpackter Artikel 6, die anschließend zu einem Stangenpacker wie z. B. einer Flow-Pack-Maschine bzw. einer einem solchen Stangenpacker zur Ausbildung einer Umverpackung um die Artikelstange dienenden, die Artikelstange zuführenden Längsfördereinrichtung zugeführt werden. Eine Forderung an derartige Stangepacker besteht darin, dass jede Artikelstange nur fehlerfrei, d. h. vollständig einzelverpackte Artikel enthält, was dann, wenn in einer Artikelstange auch unverpackte oder fehlerhafte Artikel zu einer Artikelstange angestapelt sind, dazu führt, dass die gesamte Restartikelstange ebenfalls ausgesondert werden muss.

Das vorliegende Ausführungsbeispiel verdeutlicht ein Verfahren und eine Einrichtung zum "intelligenten Anstapeln" von Artikeln derart, dass eine flexible Verkettung zwischen der vorangehenden Einzelverpackungseinheit, wie einem abschließenden Packkopf, einer kontinuierlichen Verpackungsmaschine, die der Einzelverpackung von Artikeln dient und einem nachgeordneten Stapelpacker vorgesehen ist, derart, dass nicht nur fehlerhafte z. B. unverpackte oder fehlerhaft verpackte Einzelartikel vor einer Stapelbildung ausgesondert werden können, sondern solche Artikel auch nicht zur Stapelbildung verwendet werden. Kernstück einer solchen Einrichtung zur Bildung eines Artikelstapels bzw. einer Artikelstange aus einer Mehrzahl von Artikeln, die insbesondere vorher einzelverpackt sind, ist eine Gruppiereinrichtung wie sie in einem ersten Ausführungsbeispiel nachfolgend anhand der Figuren 1 bis 7 erläutert wird.

Das erste Ausführungsbeispiel sieht für die Ausgestaltung der Gruppiereinrichtung und die Gestaltung des Förderers, in dem die Produkte oder Artikel angestapelt werden, ein Gruppierrad 2 vor, stromab eines Wendekopfes 1 zum Anstapeln der Produkte, wobei sich an das Gruppierrad 2 eine Übergabeeinrichtung 3 anschließt, die eine Artikelstange 3.04 aus angestapelten, verpackten Einzelartikeln 6 in eine Mitnehmerkette 4 übergibt. Das Gruppierrad 2 weist drei koaxiale Gruppierradsegmente oder Räder 2a, 2b, 2c, (Fig. 1/Fig. 2), die in Fig. 4 mit 2.11, 2.21, 2.31 bezeichnet sind, auf, die in einer gemeinsamen vertikalen Ebene liegende Taschen 2.12, 2.22, 2.32 aufweisen und unabhängig voneinander, insbesondere durch individuell den Rädern 2.11, 2.21, 2.31 zugeordnete Servomotoren zur Rotation um eine gemeinsame Drehachse ansteuerbar sind. Entsprechend ist in diesem Fall auch die abfolgende Übergabeeinrichtung 3 durch zwei gegenüberliegende und sich an den Produktführungskanal 2.02 anschließende und diesen seitlich begrenzende Längsfördereinheiten auf, die jeweils aus drei übereinander über koaxiale Umlenkscheiben 7a, 7b, 7c (jeweils individuell ansteuerbar) umlaufende Förderriemen oder -ketten 3a, 3b, 3c (Fig. 2) bzw. 3.11, 3.21, 3.31 (Fig. 5) gebildet sind, an denen jeweils Mitnehmerpaare 3.12, 3.22, 3.32 befestigt sind, die alle in einer vertikalen Mitnehmerebene, die auch durch eine Gleit- schiene gebildeten Produktführungskanal 3.02 enthält, angeordnet sind, wobei jedes Mitnehmerpaar eine Tasche 2.12; 2.22; 2.32 zur Aufnahme einer Produkt- oder Artikelstange 5 bzw. 2,04 oder 3.04 bildet bzw. aufweist. Ggf. könnten die Mitnehmer 3.12; 3.22; 3.32 auch einzeln zum Angriff am Ende einer Artikelstange 5 bzw. 2.04 oder 3.04 aus angestapelten Artikeln 6 angeordnet sein.

Die Gruppiereinrichtung zur Stapelbildung von vorzugsweise verpackten Einzelartikeln schließt sich, wie Figur 1 verdeutlicht, an einen Wendekopf 1 an, der korrekte, einzelverpackte Artikel zu dem Gruppierrad 2 zur Anstapelung einer vorbestimmten Anzahl einzelner, korrekt verpackter Artikel zu einer Artikelstange 5 bzw. 2.04 oder 3.04 zuführt.

Aufgrund von Artikel- oder Verpackungsfehlern für die Einzelverpackung der Artikel kommt es jedoch ggf. zu sogenannten "Leertakten", d. h. der Wendekopf 1 führt in einem bestimmten Takt dem Gruppierrad 2 keinen Artikel zu, da dieser vor Erreichen des Wendekopfes 1 oder von diesem in Verbindung mit einer hier nicht gezeigten Sensoreinrichtung aus dem Prozess ausgeschleust worden ist. Um zu vermeiden, dass die dann gebildete Artikelstange 5 einen Artikel weniger als die vorbestimmte Anzahl aufweist oder führt, erfolgt eine Segmentierung des Gruppierrades 2 in drei Greiferradsegmente 2a, 2b, 2c (Fig. 1) bzw. 2.12., 2.22, 2.32 (Fig. 4), die jeweils völlig individuell und unabhängig voneinander durch separate Servormotoren ansteuerbar sind. Hierdurch ist es z. B. möglich, dass das in den Figuren 1 bis 7 sich in einer Anstapelposition 2.01 befindende vordere Rad 2b bzw. 2.31 in einer Warteposition d. h. taktangepasst an die Bereitstellung eines neuen Einzelartikels durch den Wendekopf 1 anzuhalten, während die übrigen Räder, d. h. das hintere und das mittlere Rad 2a, 2c bzw. 2.11 bzw. 2.21 weiter individuell angesteuert rotieren und einen entsprechenden Artikelstapel, d. h. eine Produktstange 2.04 bzw. 3.04 (hier auch mit 5 bezeichnet) in die Übergabeeinrichtung 3 überführen oder in einer raschen Rückkehrbewegung zur Bereitstellung einer Tasche 5 bzw. 2.12, 2.22 oder 2.32 in der Anstapelposition 2.01 diese wieder für eine Stapelbildung bereitzustellen.

Auf diese Weise erfolgt durch das Gruppierrad 2 vorzugsweise eine Aufnahme mehrerer Produkte bzw. Einzelartikel als Artikelstange 5 bzw. 2.04 oder 3.04 vorzugsweise in einer Anzahl von drei bis sechzehn Einzelprodukten 6 in einer taktgenauen, flexiblen Zuordnung an die Bereitstellung der Einzelartikel durch einen vorgeschalteten Wendekopf 1 wie auch später eine taktgenaue Zuordnung der aufgenommenen Artikelstangen an eine nachfolgende Verpackungseinheit oder-maschine wie eine Führungs- oder Mitnehmerkette 4 eines Stangenpackers, sodass variable Abstände zwischen den Artikelstangen 5 bzw. 2.04 oder 3.04 im Bereich der Übergabeeinrichtung durch korrespondierende Flexibilisierung der Weiterführung der angestapelten Artikel (Artikelstangen) im Bereich der Übergabeeinrichtung 3 und eine kontinuierliche oder diskontinuierliche Abgabe der Arti- kelstangen möglich ist, wie nachfolgend noch genauer erläutert wird.

Die Räder 2a, 2b, 2c bzw. 2.11, 2.21, 2.31 des Gruppierrades 2 sind also völlig unabhängig voneinander hinsichtlich ihrer relativen Winkelposition zueinander drehbar und bestehen aus diametral gegenüberliegend sich von einer Nabe 8 aus erstreckenden Stegen 9 an deren Außenumfang die Taschen 2.12, 2.22, 2.32 für die Aufnahme jeweils einer Artikelstange 5 bzw. 2.04 oder 3.04 durch jeweils einen in Umfangsrichtung vorauslaufenden, vorderen und einem nachlaufenden hinteren Mitnehmer gebildet sind. Dies haben einen Abstand voneinander, der geringfügig größer ist als die Gesamtlänge einer Artikelstange 5 bzw. 2.04 oder 3.04 aus angestapelten Artikeln 6.

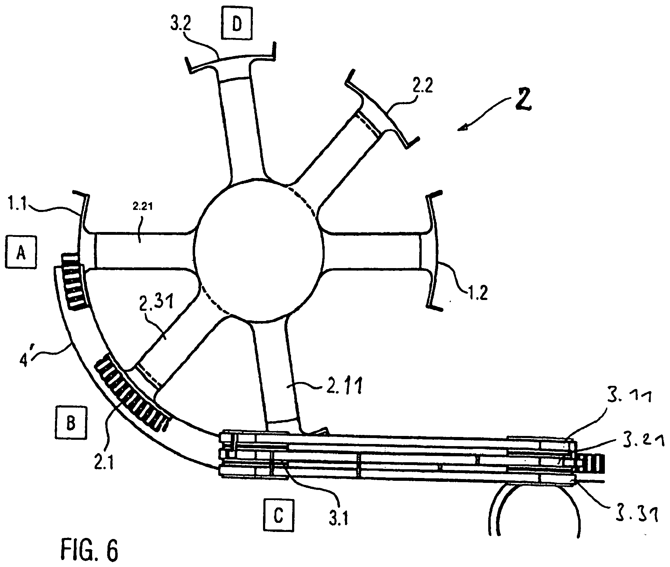

Das in der Aufnahmeposition 2.01 befindliche Rad kann also warten bis die entsprechende Anzahl fehlerfreier, einzelverpackter Artikel 6 in der zugehörigen Tasche 1.1 (vgl. Figur 6) angestapelt ist. Derweil führt das vordere Rad 2b bzw. 2.31 in der zugehörigen Tasche eine Artikelstange 2.04 (Fig. 4) durch einen im Querschnitt U- oder C-förmigen und in der Art eines Viertelkreisbogens ausgeführten Produktführungskanal 2.02 zur sicheren Produktführung in die Übergabeposition 2.03 (Fig. 4) und Übergabe der Artikelstange an die Übergabeeinrichtung 3 während das hintere Rad 2.11 rasch zurückläuft, um sogleich nach Komplettierung einer Artikelstange in der Aufnahmeposition 2.01 an diese Stelle zur Aufnahme eines neuen Artikelstapels zu treten.

Auf diese Weise ist ein intelligentes Anstapeln, d. h. die Herstellung vollständiger Artikelstangen mit der immer gleichen, vorbestimmten Artikelanzahl pro Artikelstange auch dann möglich, wenn in Verbindung mit fehlenden Produkten und sogenannten "Leertakten" im vorausgehenden Prozess eine Störung in der Produktzufuhr auftritt. Mit anderen Worten wartet die Gruppierung in Gestalt eines Gruppierradsegmentes in der Aufnahmeposition 2.03 bei Leertakten bis die entsprechende vorbestimmte Anzahl von einzelnen Artikeln angestapelt ist und die Artikelstange 2.04 bzw. 3.04 oder 5 vollständig ist.

Gegebenenfalls können die am Außenumfang der Räder 2a bis 2c bzw. 2.11, 2.21, 2.31 des Gruppierrades 2 auch mit mehr als einer bzw. zwei (wie hier) Taschen 2.12, 2.22 oder 2.32 versehen sein. Wesentlich ist, dass diese Taschen der unterschiedlichen Gruppierradsegmente 2a bis 2c bzw. 2.11, 2.21, 2.31 stets in die selbe Stapelposition 2.01 gelangen, d. h. sämtliche Taschen des Gruppierrades in einer vertikalen Ebene (durch entsprechende Kröpfung der Stege) angeordnet sind.

### Zum Gruppierrad 2

Das Gruppierrad 2 ermöglicht eine Entkopplung des Anstapeln einzelner, insbesondere einzeln verpackter Artikel und Produkte zu einer Stangenformation (Artikelstange 5, 2.04, 3.04) von einem vorgeschalteten Einzel-Verpackungsprozess der einzelnen Artikel 6 und das Abgeben dieser so gebildeten, stets vollständigen aus fehlerfreien Artikeln gebildeten Artikelstange an eine nachgelagerte Baugruppe z. B. zur Ausbildung einer Umverpackung in einen Stangenpacker wie z. B. einer Flow-Pack-Maschinen.

Das Anstapeln der einzelnen Artikel in der Anstapelposition 2.01 (Position A in Fig. 6) erfolgt in die in dieser Position befindlichen Tasche 2.32 (die in Fig. 6 mit 1.1 bezeichnet ist). Diese Tasche 1.1 wird durch zwei Mitnehmer mit konstantem Abstand zueinander bildet.

Selbstverständlich sind die separat angetriebenen Räder 2.11., 2.21, 2.31 jeweils auch in Bezug auf die Größe der Taschen 2.12, 2.22 bzw. 2.32 austauschbar in Abhängigkeit von der jeweiligen Anzahl von Artikeln, die zu einer Stange gestapelt werden.

Obwohl hier nicht im Einzelnen dargestellt, sind vorzugsweise die Nabenabschnitte der Gruppierradsegmente oder Räder 2.11, 2.21, 2.31 bzw. 2a, 2b, 2c auf je einer separat angetriebenen Welle, die insbesondere ein Zahnprofil aufweist oder mit einem solchen verbunden ist, das mit einem Zahnriemen in Eingriff ist, angeordnet, vorzugsweise sind die Wellen zumindest teilweise als Hohlwellen ausgebildet und koaxial zur Rotation um eine (starre) Achse angeordnet; die die Drehachse der Gruppierradsegemente bzw. Räder 2a bis 2c bzw. 2.11, 2.21 oder 2.31 des Gruppierrades 2 bildet.

Vorzugsweise sind die Taschen der Räder 2.11, 2.21, 2.31 bzw. 2a bis 2c durch zwei Mitnehmer mit vorzugweise konstantem Abstand zueinander gebildet. Das mittlere Rad 2.21 bewegt sich dabei synchronisiert zur stromauf angeordneten Abgabeeinheit der vorgeschalteten Einzelverpackungsmaschine, d. h. dem Wendekopf 1. Die zweite, gegenüberliegende Tasche in Fig. 6 mit 1.2 bezeichnet, des mittleren Rades 2.21 ist zu dieser Zeit leer und ohne Funktion.

Zum gleichen Zeitpunkt transportiert das vordere Rad 2.31 die in einer Tasche, die in Fig. 6 mit 2.1 bezeichnet ist, gebildete Artikelstange 2.04, entlang des Produktführungskanales 2.02, der an seiner Oberseite geschlitzt ist und insgesamt im Querschnitt ein C- oder U-förmiges Profil aufweist und der in der Art eines Vertelkreisbogens ausgeführt ist entlang eines Weges B von der Stapelposition 2.01 bzw. Position A zur Übergabeposition C, d. h. zur Übergabeposition 2.03 (s. Fig. 4) zu der anschließenden Übergabeeinrichtung 3.

Aufgrund des C- oder U-förmig profilierten Pro- duktführungskanales 2.02 zur Produktführung ist die in der zugehörigen Tasche des Rades 2.22 gebildete und geführte Artikelstange 2.04 dabei allseitig durch die stationäre Produktführung gegen Ausbrechen gesichert. Die zweite Tasche des vorderen Gruppierradsegmentes bzw. Rades 2.31 bzw. 2b, in Fig. 6 mit 2.2 bezeichnet, ist zu dieser Zeit leer und ohne Funktion. Das hintere Gruppierradsegment 2.11 gibt die gebildete Artikelstange mit der in Fig. 6 mit 3.1 bezeichneten Tasche an die nachfolgend angeordnete, zu einer nachgeschalteten Verpackungseinheit wie einem Stangenpacker angeordneten Längsfördereinrichtung 4 ab und ist auf diese synchronisiert. Diese Längsfördereinrichtung 4 besitzt Mitnehmer 4a, die hinter die zugeführte Produktstange 2.04 oder 3.04 greifen und fest mit der Mitnehmerkette 4 verbunden sind.

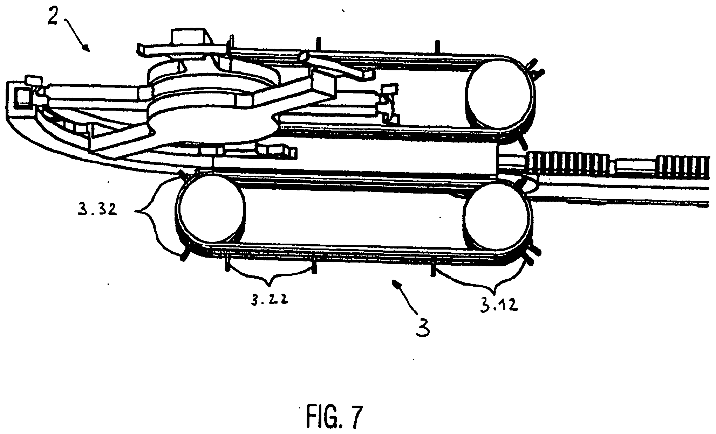

Auf diese Weise werden die gebildeten Artikelstangen 2.04, 3.04 bzw. 5 taktsynchronisiert dem nachfolgenden Stangenpacker, wie z. B. eine Flow-Pack-Maschine zugeführt. Das hintere Rad 2.11 übergibt die Artikelstange 3.04, die sich in der in Fig. 6 mit 3.1 bezeichneten Tasche befindet an die Übergabeeinrichtung 3 und ist auf diese synchronisiert. Nach der Übergabe bewegt sich das hintere Gruppierradsegment bzw. -rad 2.11 weiter, so dass die gegenüberliegende (leere) Tasche 3.2 des Rades 2.11 die in Fig. 6 mit 1.1 bezeichnete Tasche 1.1 des mittleren Gruppierradsegementes bzw. Rades 2.21 einholt und benachbart zu dieser angeordnet ist (beide Taschen 1.1 und 3.2 befinden sich (wie alle Taschen des Gruppierrades 2) durch unterschiedliche Kröpfung in der gleichen vertikalen Bewegungsebene (siehe auch Fig. 7), da die Anstapelposition am Beginn des gebogenen Übergabekanales, der in Fig. 6 mit 4' bezeichnet ist, jeweils die gleiche Position aufweist.

Nachdem die in Fig. 6 in der Anstapelposition A befindliche Tasche 1.1 des Rades 2.21 vollständig entsprechend der vorbestimmten Anzahl von Einzelartikeln zur Bildung einer Artikelstange gefüllt ist, kann nach unmittelbarer Bewegung der entsprechenden Tasche 3.2 in die Anstapelposition A in diese die Abnahme verpackter Artikel von dem vorgeschalteten Wendekopf und das Anstapeln in der dann in der Anstapelposition A befindlichen Tasche 3.2 (Fig. 6) erfolgen.

Die in Fig. 6 mit 1.1 bezeichnete Tasche des Greifersegmentes bzw. Rades 2.21, die dann einen vollständigen Artikelstapel (=Artikelstange) enthält, bewegt sich dann durch den im Querschnitt C-oder U-förmigen Produktführungskanal, in Fig. 6 mit 4' bezeichnet, während die Artikelstange 3.04 in der Tasche 2.1 des vorderen Greiferradsegementes bzw. Rades 2.31, die Artikelstange in der Übergabeposition C an die Übergabeeinrichtung 3, d. h. die Förderer mit den gegenüberliegenden in gleicherweise wie das Gruppierrad 2 segmentierten, jeweils unabhängig antreibbaren Ketten oder Förderriemen 3.11, 3.21 (Fig. 5) bzw. 3.31 abgibt und
anschließend die Tasche 2.2 des vorderen Ra- des 2.31, hinter der in der Anstapelposition A befindlichen Tasche 3.2 des hinteren Rades bzw. Greiferradsegementes 2.11 wartet.

Dieser Zyklus wiederholt sich abwechselnd für alle Taschen (in Fig. 6 mit 1.1, 1.2, 2.1, 2.2 und 3.1 bzw. 3.2 bezeichnet).

Die Entkopplung des Anstapeln der Artikel in die Taschen zur Bildung einer kompletten Artikelstange von der vorgeschalteten Abgabebewegung eines Wendekopfes 1 (Fig. 1) allgemeiner einer vorgeschalteten Verpackungsmaschine zur Einzelverpackung von zu Artikelstangen zu verpackenden Produkten), ermöglicht das Warten der in der Anstapelposition zu füllenden Taschen im Falle eines Leertaktes in der vorgeschalteten Verpackungsmaschine zur Einzelverpackung der Artikel. Die Übergabe der Artikelstangen an die Übergabeeinrichtung 3 kann trotz Warten in der Anstapelposition ungehindert durchgeführt werden (=intelligentes Anstapeln).

Um die Abgabe der angestapelten Artikelstange an die Übergabeeinrichtung 3 stets im gleichen Zeitfenster zu realisieren, wird das Warten im Falle eines Leertakes (kein Artikel) durch ein Vorfahren, d. h. eine Bewegung des jeweiligen Rades bzw. Greiferradsegmentes mit einer fertigen Artikelstange zwischen der Anstapelposition A und der Übergabeposition C und den Übergabeförderer 3 durch eine Bewegung entlang des Produktführungskanals 4 mit erhöhter Geschwindigkeit ausglichen.

Eine perspektivische Draufsicht der Übergabeeinrichtung 3 mit zugeordnetem Gruppierrad 2 ist nochmals in Fig. 7 gezeigt, wobei die jeweils aus drei separat antreibbaren Förderern (Ketten oder Riemen 3.11, 3.21, 3.31) mit jeweiligen Mitnehmerpaaren 3.12, 3.22, 3.32 bestehenden, beidseitig des Förderkanales der Artikelstangen duplizierte Übergabeeinrichtung 3 in Fig. 7 nochmals gezeigt ist. Die Funktionsweise der Übergabeeinrichtung 3 entspricht analog derjenigen des Gruppierrades 2. Alle Mitnehmer 3.12, 3.22, 3.32 der Mitnehmerketten 3.11, 3.21, 3.31 (alle Ketten arbeiten unabhängig mit separat und individuell ansteuerbarem Servomotoren, wobei jeweils die auf beiden Seiten in einer gleichen Horizontalebene angeordneten Ketten oder Riemen miteinander antriebsmäßig gekoppelt sind) bewirken von beiden Seiten das Vorschieben des entsprechenden Artikelstapels entlang einer Gleitschiene im Förderkanal bewirken. Die Übergabeeinrichtung 3 ist in diesem Ausführungsbeispiel dreizügig, d. h. mit jeweils drei Ketten auf jeder Seite ausgeführt.

Mindestens zwei Räder (im Beispiel drei Räder, 2.11, 2,21, 2.31) oder Gruppiersegmente sind auf einer Drehachse angeordnet. Jedes Rad 2a, 2b, 2c bzw. 2.11, 2.21, 2.31 besitzt einen eigenen Antrieb (Servomotor) und kann so unabhängig rotierend bewegt werden. Darüber hinaus besitzt jedes Rad mindestens eine Tasche konstanter Länge (im Ausführungsbeispiel jeweils zwei Taschen, 2.12, 2.22, 2.32) mit einem im Umlaufrichtung vorderen und einem hinteren Mitnehmer. Zwischen den Mitnehmern kann eine Anzahl von Produkten angeordnet und gefördert werden. Es ist jedoch auch möglich die Aufnahmekapazität der Taschen vorzugsweise sensorgesteuert variabel auszubilden, falls das zur Flexibilisierung des Anstapel- und Gruppierprozesses sinnvoll erscheint.

Das Anstapeln der Produkte zu einer Stange erfolgt in Position 2.01. Über eine Produktführung (2.02) werden die Produktstangen (2.04) zwischen den Mitnehmern einer Tasche zur Übergabestelle (2.03) gefördert. Die Taschen 2.12, 2.22, 2.32 der einzelnen Räder 2.11, 2.21, 2.31 (auch mit 2a, 2b, 2c bezeichnet (siehe 1. Fig. 2)) sind so gestaltet, dass sie sich in ein und derselben Ebene bewegen.

### Zur Übergabeeinrichtung 3

Die Übergabeeinrichtung 3 besteht aus zwei opponierend angeordneten Fördervorrichtungen 21, 22, die derart opponierend zueinander angeordnet sind, dass die Einzelförderer (im vorliegenden Ausführungsbeispiel 3) Riemen oder Ketten 3.11, 3.21, 3.31 der beiden Fördervorrichtungen 21, 22 sich jeweils beiderseits eines Förderpfades oder -spaltes, in dem sich die Artikelstangen 2.04 bzw. 3.04 bewegen, angeordnet sind, wobei die Einzelförderer jeweils miteinander auch hinsichtlich der Position ihrer durch die Mitnehmer 3.12, 3.22, 3.32 gebildeten Taschen miteinander korrespondieren, sodass jeweils zwei gegenüberliegende Mitnehmer der in der gleichen Ebene liegenden Ketten oder Riemen 3.11, 3.21, 3.31 die Artikelstange entlang einer Gleitschiene 3.02 (Produktführung) in Richtung der anschließenden Mitnehmerkette 4 einer nachgeordneten Verpackungsmaschine (Stangenpacker) schieben. Diese Mitnehmerkette 4 besitzt permanente Abstandshalter 4a zur Beabstandung der einzelnen Artikelstangen 3.04.

Mindestens zwei Ketten/Riemen (im ersten Ausführungsbeispiel drei Ketten, 3.11, 3.21, 3.31) sind praktisch deckungsgleich übereinander angeordnet. Jede Kette besitzt einen eigenen Antrieb durch einen individuell steuerbaren Servomotor und kann so unabhängig bewegt werden. Darüber hinaus besitzt jede Kette 3.11, 3.21, 3.31 mindestens eine Tasche 3.12, 3.22, 3.32 konstanter Länge (im Ausführungsbeispiel jeweils zwei Taschen, gebildet zwischen einem vorderen und einem hinteren Mitnehmer 3.12, 3.22, 3.32. Zwischen den Mitnehmern kann eine Anzahl von Produkten angeordnet und gefördert werden.

Das Aufnehmen der Produktstange erfolgt in der Position 3.01. Über eine Produktführung (3.02) werden die Produktstangen (3.04) zwischen den Mitnehmern einer Tasche zur Übergabestelle (3.03) gefördert. Die Taschen der einzelnen Ketten 3.11, 3.21, 3.31 sind so gestaltet, dass sie sich in ein und derselben Ebene bewegen.

Auf diese Weise können variable Abstände (oder auch konstante Abstände) zwischen den Artikelstangen 3.04 und eine in Bezug auf eine Folgemaschine (Mitnehmerkette 4) synchronisierte Übergabe der Artikelstange 3.04 erfolgen.

### Zur Funktionsweise

### Das Gruppierrad 2

Die Funktionsweise der Gruppiereinrichtung wird anhand von Fig. 6 erläutert. Das Gruppierrad ermöglicht eine Entkoppelung des Anstapels einzelner Produkte zu einer Stangenformation von einem vorgeschalteten Einzelverpackungsprozess und das Abgegeben dieser Artikelstange an eine nachgelagerte Baugruppe z. B. zur Bildung einer Umverpackung in einen Stangenpacker.

Das Anstapeln der Artikel (Pos. A) erfolgt gemäß Fig. 6 / Fig. 7 in die Tasche 1.1 des mittleren Rades 2.21. Diese Tasche 1.1 wird durch zwei Mitnehmer mit konstantem Abstand zueinander gebildet. Das Rad 2.21 bewegt sich dabei synchronisiert zur davor angeordneten Verpackungseinheit "Wendekopf". Die zweite Tasche 1.2 des Rades 1 ist zu dieser Zeit leer und ohne Funktion.

Das Rad 2.31 transportiert die Stangenformation (Artikelstange) in der Tasche 2.1 entlang des Weges B von der Anstapelposition (A) zur Übergabeposition (C). Die Stangenformation ist dabei allseitig durch den feststehenden Produktführungskanal gegen Ausbrechen gesichert. Die zweite Tasche 2.2 ist zu dieser Zeit leer und ohne Funktion.

Das Rad 2.11 gibt die Stangenformation (Artikelstange) mit der Tasche 3.1 an die nachfolgend angeordnete Einheit ab und ist auf diese synchronisiert. Nach der Abgabe bewegt sich Rad 2.11 weiter, so dass die gegenüber liegende Tasche 3.2 die Tasche 1.1 des Rades 1 einholt. Nachdem die Tasche 1.1 vollständig gefüllt ist, kann sofort weiter in die wartende Tasche 3.2 eingestapelt werden.

Tasche 1.1 fährt dann vor während Tasche 2.1 abgibt und anschließend Tasche 2.2 hinter der Tasche 3.2 wartet. Dieser Zyklus wiederholt sich wechselnd für alle Taschen.

Die Funktionsweise der Übergabeeinrichtung 3 in ihrer jeweils dreigliedrigen (dreizügigen) Ausführung der drei unabhängig voneinander angetriebenen oberen, mittleren und unteren Mitnehmerkette 3.11, 3.21, 3.31, die jeweils zu beiden Seiten des Transportweges der Artikelstangen angeordnet sind, wobei die Förderer (Riemen oder Mitnehmerketten der gleichen Horizontalebene jeweils zusammenarbeiten ist analog zu derjenigen des Gruppierrades 2.

In anderen Ausführungsbeispielen kann die Übergabeeinrichtung z. B. auch nur zweizügig ausgeführt sein (d. h. mit zwei unabhängig bewegbaren Mitnehmerketten oder -riemen, vorzugsweise zu beiden Seiten des Transportweges.

Ggf. kann die Übergabeeinrichtung 3 auch nur an einer Seite des Transportweges zur Übergabe von Artikelstangen an eine nachgeordnete Längsfördereinrichtung wie eine Mitnehmerkette 3 (vgl. Fig. 1 bis 3) vorgesehen sein.

In Fig. 7 übernimmt die Tasche der mittleren Mitnehmerkette 3.21 (vgl. auch mittlere Mitnehmerkette 3c in Fig. 2) die von dem hinteren Gruppierradsegment 2.11 an die Übergabeeinrichtung 3 abgegebene Artikelstange, während die Tasche 2.1 des vorderen Greiferradsegementes bzw. Rades 2.31 nach vorn bewegt wird und die vorherige Artikelstange bestehend aus angestapelten Einzelartikeln kontinuierlich oder diskontinuierlich an die nachfolgende Längsfördereinrichtung 4 (Mitnehmerkette) übergibt. Die obere Mitnehmerkette 3.11 der Übergabeeinrichtung 3 hat die Artikelstange bereits an den nachgeordneten Längsförderer 4 abgegeben, so dass die Tasche des gleichen oberen Förderers bzw. der oberen Mitnehmerkette 3.11 bis hinter die Tasche der mittleren Mitnehmerkette 3.21 verfahren kann (vgl. Fig. 7) und dort auf die Übernahme der nächsten Artikelstange aus dem Gruppierrad 2 wartet

Auf diese Weise ist eine einerseits flexibilisierte andererseits synchronisiert taktgenau auf die vorausliegende Einzelartikel-Verpackungseinrichtung bzw. in nachfolgenden Stangenpackern arbeitende Gruppiereinrichtung oder Stapelbilder geschaffen, bei dem andererseits verhindert ist, dass fehlerhafte Artikel zur Bildung eines Artikelstapels verwendet werden oder bei Auftreten von Leertakten eine unvollständige Stapelbildung erfolgt. Vielmehr kann die Gruppiereinrichtung wie ein Teil (Förderer) eines Gruppierrades in der Anstapelposition warten, bis eine vollständige Anzahl fehlerfreier bzw. einzelverpackter Artikel zu einer kompletten Artikelstange angestapelt ist, ehe eine Übergabe und Zuführung zu einem nachgeordnetem Stapelpacker erfolgt. Zugleich kann aber der Transport vorausliegender Artikelstangen zu dem Stangepacker ungehindert erfolgen. Die einzelnen Greiferradsegmente bzw. Räder des Greiferrades führen jeweils nicht nur durch ihre permanente Richtungsänderung sondern auch
hinsichtlich ihres Betrages beschleunigte Be- wegungen aus, so dass Wartezeiten für den Anstapelprozess durch parallel-Förderorgane des Gruppierrades und entsprechend raschere beschleunigte Bewegungen zwischen einer Anstapelposition und einer Übergabeposition an einen Übergabeförderer ausgeglichen werden.

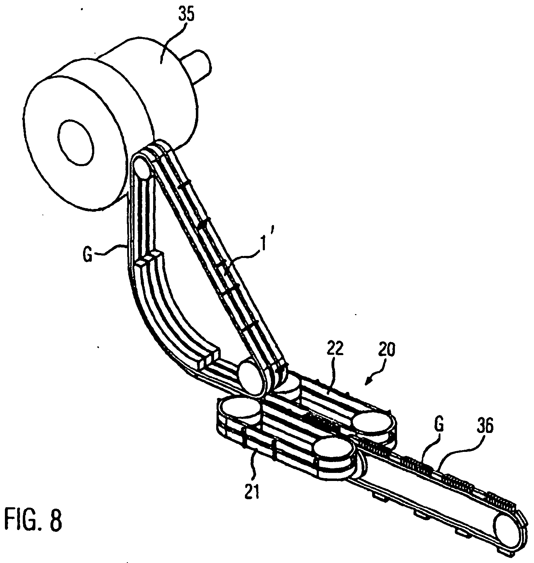

Die Erfindung wird nachstehend auch anhand eines zweiten Ausführungsbeispieles, das in den Figuren 8 bis 15 dargestellt ist, erläutert.

In Figur 8 ff ist eine Baugruppe dargestellt, mit der Einzelprodukte P zu Produktstangen G aufgestapelt und diese Produktstangen G dann weiteren Verarbeitungsschritten, z. B. einer Neuverpackung durch einen Stangenpacker zugeführt werden. Eine solche Baugruppe kann insbesondere in eine Verpackungsmaschine integriert sein, um in einem Zwischenschritt die bereits verpackten Einzelprodukte P zu Stangen G anzustapeln und diese Produktstangen G dann an eine Endverpackungseinheit zu übergeben, wo die Produktstangen G nochmals mit einer äußeren Zweitverpackung versehen werden, z. B. im Rahmen einer Flow-Pack-Maschine.

Sowohl bei Figur 8 als auch bei den übrigen Figuren handelt es sich jeweils um stark vereinfachte Prinzipdarstellungen, bei denen zur besseren Verständlichkeit die übrigen Maschinenteile, an denen die dargestellten Komponenten befestigt sind, weggelassen wurden.

Gemäß Figur 8 umfasst eine Baugruppe zum Anstapeln und Abgeben von Produktstangen G zunächst einen Wendekopf 35, der ein Bestandteil der Verpackungsmaschine zur Herstellung der Einzelverpackung ist. Durch Rotation des Wendekopfes 35 werden die einzelverpackten Produkte P an eine nachgelagerte Fördervorrichtung 1' übergeben, indem die Produkte P bei der Produktübergabe zu einer Produktstange G angestapelt werden.

Hierzu weist die Fördervorrichtung 1' mehrere Mitnehmerpaare 2', 3', 4', 5', 6', 7', 8', 9', 10' auf, die an der Außenseite von angetriebenen Riemen 1 a, 1 b, 1c befestigt sind und zwischen denen die vom Wendekopf 35 abgegebenen Einzelprodukte P zunächst unter Bildung von Produktstangen G eingestapelt und dann weitergefördert werden. Der Abstand zwischen den Mitnehmern eines Mitnehmerpaares 2', 3', 4', 5', 6', 7', 8', 9', 10' dient somit als Aufnahmebereich, um mehrere (in der Regel zwischen 3 bis 16) als Stange G aufeinander gestapelte Einzelprodukte P aufzunehmen und an die nachfolgenden Komponenten der Verpackungsmaschine weiterzuführen.

Im in Figur 8 dargestellten Ausführungsbeispiel handelt es sich bei dieser nachgelagerten Komponente um eine Fördereinheit 20, die wiederum aus zwei sich horizontal gegenüberliegenden Fördervorrichtungen 21, 22 besteht. Diese Fördereinheit 20 nimmt die Produktstangen G von der vorgelagerten Fördervorrichtung 1 auf und ordnet diese Produktstangen G wiederum taktgenau einem weiteren nachfolgenden Maschinenteil zu.

Das nachfolgende Maschinenteil ist in Form einer vorzugsweise, kontinuierlich umlaufenden Mitnehmerkette 36 ausgebildet. Am Außenumfang der Mitnehmerkette 36 sind gleichmäßig beabstandete Abstandshalter 37 vorgesehen, zwischen denen die von der Fördereinheit 20 übernommenen Produktstangen G aufgenommen werden. Diese Mitnehmerkette 36 bildet bereits einen Bestandteil der nachfolgenden Verpackungsmaschine zur Herstellung der Stangenverpackung, so dass durch die Fördervorrichtung 1 und die Fördereinheit 20 ein kontinuierlicher Produkttransfer von der Verpackungsmaschine für Einzelverpackung auf die Verpackungsmaschine für Stangenverpackung realisiert wird, indem zunächst Stangen G von aus dem Einzelverpackungssystem entnommenen Produkten P angestapelt und diese Stangen G an das Stangenverpackungssystem weitergefördert werden.

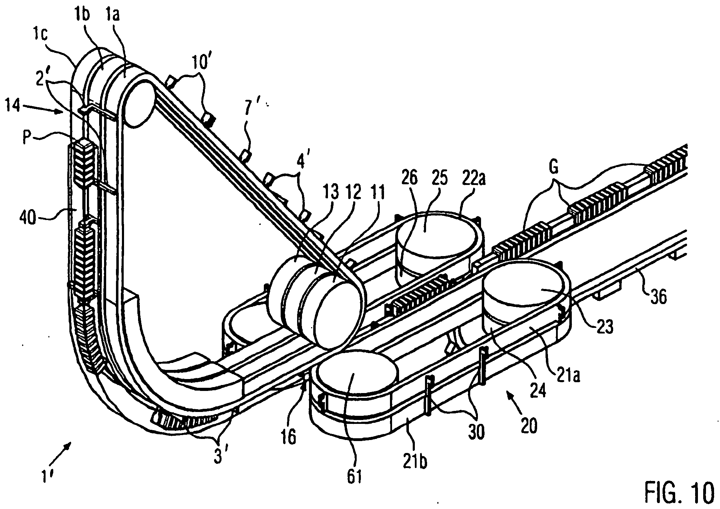

Die Fördervorrichtung 1' und die Fördereinheit 20, die den vorgeschilderten Transfer der Produktstangen G bewerkstelligen, sind in den weiteren Figuren 10 bis 15 im Einzelnen nochmals näher dargestellt und werden auch im weiteren Verlauf der Beschreibung dieses weiteren Ausführungsbeispiels detailliert beschrieben.

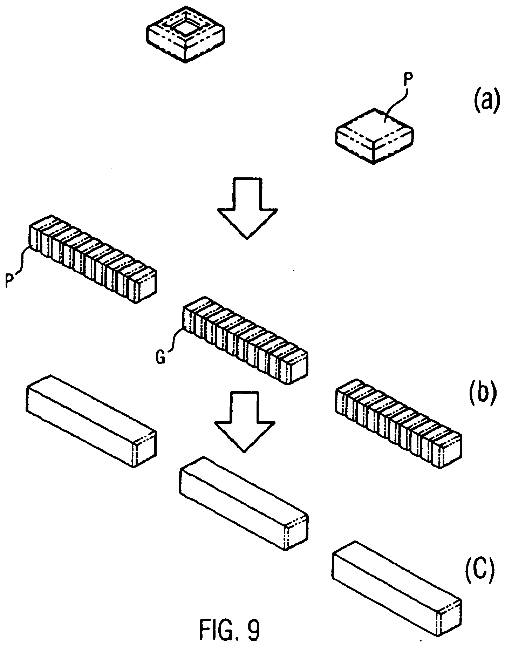

Die Figur 9 verdeutlicht anhand der drei Ablaufschritte (a) bis (c), in denen zusammenfassend die am Produkt vollzogenen Verpackungs- und Gruppierungsschritte dargestellt sind, die räumlich-funktionelle Einordnung der erfindungsgemäß beanspruchten Fördervorrichtung 1 im Rahmen des Gesamtverpackungsprozesses. Diese Figur gilt ganz genauso für das vorerläuterte erste Ausführungsbeispiel.

In einem ersten Verpackungsschritt (a) wird in einer Einzelverpackungsmaschine das Einzelprodukt in bekannter Weise verpackt. Dieser Verpackungsschritt (a) geht der Fördervorrichtung 1' gemäß Figur 8 voraus und lediglich der Wendekopf 35 der Einzelverpackungsmaschine, der die verpackten Einzelprodukte P an die Fördervorrichtung 1' übergibt, ist in Figur 8 in schematischer Form dargestellt.

Bei den einzeln zu verpackenden Produkten kann es sich generell um Stückartikel handeln, die in großen Mengen anfallen, wobei die erfindungsgemäße Fördervorrichtung 1' insbesondere bei kleinstückigen Süßwarenartikeln, wie Bonbons, Pralinen und ähnlichem, zum Einsatz gelangt, welche an kontinuierlich arbeitenden Hochleistungs-, Form-, Schneide- und Verpackungsmaschinen einzeln gefertigt und anschließend in beliebiger Faltung (Dreheinschlag, Falteinschlag, Seitenfaltung...) verpackt werden. Das verpackte Einzelprodukt P, wie
es am Ende des ersten Ablaufschrittes (a) in Figur 9 erhalten wird, bildet schließlich das Eingangsprodukt für die darauffolgende Stapelung, Gruppierung und Weiterförderung, welche durch die erfindungsgemäße Fördervorrichtung 1 realisiert wird.

Die durch die Fördervorrichtung 1' erfüllte Funktion der Stapelung und Gruppierung der verpackten Einzelprodukte P wird in Figur 9 durch den Ablaufschritt (b) veranschaulicht. Die Stapelung und Gruppierung der verpackten Einzelprodukte P stellt im Ablauf des Verpackungsprozesses einen durchsatzbegrenzenden "Flaschenhals" dar, da für diesen Schritt (b) eine Synchronisation und somit Drosselung der Fördergeschwindigkeit der Fördervorrichtung 1' auf die Einstapelgeschwindigkeit notwendig ist. Nur durch diese Synchronisation (Geschwindigkeitsangleichung) wird eine zuverlässige Bildung von Produktstangen G; die aus mehreren, im dargestellten Ausführungsbeispiel aus zehn verpackten Einzelprodukten P bestehen, gewährleistet, ohne dass dabei Fehl- oder Leerstellen gebildet werden.

Im Ablaufschritt (b) sind die Produktstangen G in gleichmäßigen Abständen zueinander dargestellt worden, wobei jedoch die Fördervorrichtung 1', erlaubt, diese Abstände zwischen den einzelnen Produktstangen G variabel einzustellen. Die Herstellung variabler Abstände zwischen den Produktstangen G gestattet eine kontinuierliche oder intermittierende Abgabe der Produktstangen G an die nachgelagerte Verpackungsmaschine zur Stangenverpackung, ohne dass diese wegen einer fehlenden Versorgung mit kompletten, fehlerfreien Produktstangen G stillstehen oder unproduktive Leertakte ausführen muss.

Die Herstellung variabler Abstände zwischen den Produktstangen G erlaubt zudem ein "intelligentes" Anstapeln der Einzelprodukte P in der Fördervorrichtung 1'. "Intelligent" bedeutet in diesem Zusammenhang, dass immer nur vollständige Produktstangen G, das heißt immer nur Produktstangen G mit der gleichen Anzahl an Einzelprodukten P pro Produktstange G in der Fördervorrichtung 1' angestapelt werden, und zwar auch, wenn die der Fördervorrichtung 1' vorausgehende Verpackungsmaschine für Einzelverpackung Leertakte ausführt, z.B. wenn ein fehlerhafter oder fehlerhaft verpackter Artikel vorher ausgeschleust wird. In diesem Fall wartet nämlich der der Anstapelung von Einzelprodukten P dienende Aufnahmebereich der Fördervorrichtung 1' so lange, bis die vorausgehende Verpackungsmaschine wieder funktionstüchtig ist und keine Leertakte mehr produziert, so dass die nächste Produktstange G im Aufnahmebereich der Fördervorrichtung 1' wieder vollständig angestapelt werden kann.

Im Ablaufschritt (c) der Figur 9 wird schließlich die Funktion der sich gemäß Figur 10 an die Fördervorrichtung 1 und Fördereinheit 20 anschließenden Verpackungsmaschine für die Stangenverpackung (Stangenverpacker) veranschaulicht, wobei in Figur 10 von dieser Endverpackungsmaschine nur eine zuführende Mitnehmerkette 36 dargestellt ist. Ein Stangenverpacker schließt sich an die Fördervorrichtung 1' und Fördereinheit 20 an und bildet den finalen Ablaufschritt des Gesamtverpackungsprozesses. Das Verpacken der Produktstangen G kann ebenfalls in bekannten, kontinuierlich arbeitenden Hochleistungs-Verpackungsanlagen erfolgen, bei denen die Produktstangen G in beliebiger Lageanordnung (z.B. Flach- oder Hochkant) in ein weiteres Packmittel verpackt werden. Diese Zweitverpackung kann ebenfalls je nach Einsatzgebiet durch Falteinschlag, als "Schicht gegen Schicht"-Siegelung (FinSeal) oder als Schlauchbeutel (FlowPack) gebildet werden.

Das Ausführungsbeispiel zeigt die zwischen der vorgelagerten Verpackungsmaschine für Einzelverpackung und der nachgelagerten Verpackungsmaschine für Stangenverpackung eingefügte Fördervorrichtung 1' und Fördereinheit 20, in Perspektivansicht in Figur 10, schematisch. An einer Aufnahmestation 14 werden die verpackten Einzelprodukte P an die Fördervorrichtung 1' übergeben, wobei die Einzelprodukte P hierzu in Form einer zunächst vertikal ausgerichteten Produktstange G zwischen ein Mitnehmerpaar 2' der Fördervorrichtung 1' aufeinander gestapelt werden. Die Einzelprodukte P werden hierzu nacheinander unter Bildung eines Produktstapels G auf den unteren Mitnehmer des sich langsam weiter nach unten absenkenden Mitnehmerpaares 2' aufgelegt, wobei ein entlang der Fördervorrichtung 1' verlaufender Führungskanal 40 eine vierseitige Führung der angestapelten Produktstangen G ermöglicht, so dass die sich unsichtbar innerhalb des Führungskanals 40 fortbewegenden Mitnehmerpaare 2', 5', 8', 3', 6' lediglich eine schiebende Förderbewegung auf die Produktstangen G ausüben, während der Führungskanal 40 verhindert, dass die Produktstangen G aus der Fördervorrichtung 1' fallen.

Die Fördervorrichtung 1' übergibt schließlich an einer am Ende des Führungskanals 40 gelegenen Übergabestation 16 die Produktstangen G an eine Fördereinheit 20. In Figur 10 sind die Produktstangen G im Verlauf ihrer entlang der Fördervorrichtung 1 zurückgelegten Förderstrecke, d. h. im Abschnitt von der vertikalen Aufnahmeposition 14 zur horizontalen Übergabeposition 16, nicht sichtbar, da sie allseitig von dem L-förmig gebogenen Führungskanal 40 umschlossen sind, und erst in der horizontalen Fördereinheit 20 nach ihrem Austritt aus dem Führungskanal 40 sind die angestapelten Produktstangen G zu erkennen.

Die Fördervorrichtung 1' besteht in diesem weiteren Ausführungsbeispiel aus drei parallel nebeneinander angeordneten, in nahezu dreieckförmiger Gestalt schlaufenförmig umlaufenden Zahnriemen 1a, 1b, 1c, nämlich aus einem ersten, dem Betrachter zugewandten, vorderen Zahnriemen 1a, einem zweiten, mittleren Zahnriemen 1 b und einem dritten, dem Betrachter abgewandten, hinteren Zahnriemen 1c. Jeder der drei Zahnriemen 1 a, 1 b, 1 c ist mit
drei in Riemenumlaufrichtung gleichmäßig beabstandeten Mitnehmerpaaren verbunden, so dass die Fördervorrichtung 1 insgesamt neun Mitnehmerpaare 2', 3', 4', 5', 6', 7', 8', 9', 10' umfasst, die wiederkehrend durch den Führungskanal 40 hindurchgeführt werden, um am Eingang des Führungskanals 40 die Einzelprodukte P unter Bildung eines Produktstapels G aufzunehmen und am Ausgang des Führungskanals 40 die aufgenommenen Produktstapel G wieder zur Übergabe an die Fördereinheit 20 freizugeben.

Die drei Zahnriemen 1a, 1b, 1c sind jeweils über drei Umlenkpunkte geführt, wobei einer dieser Umlenkpunkte, welcher der Übergabestation 16 an die Fördereinheit 20 gegenüberliegt, durch die drei Antriebseinheiten der Zahnriemen 1a, 1b, 1c gebildet wird, und wobei jeder Zahnriemen 1 a, 1 b, 1 c separat von einem unabhängig steuerbaren Servomotor 11, 12, 13 angetrieben wird. Der im oberen Eckbereich der dreieckförmigen Endlosschlaufe der Fördervorrichtung 1' gelegene Umlenkpunkt ist durch drei parallel nebeneinander angeordnete Umlenkrollen 41, 42, 43 realisiert, wobei jeder Zahnriemen 1a, 1b, 1c über seine eigene Umlenkrolle 41, 42, 43 geführt ist.

Schließlich wird der dritte Umlenkpunkt im linken unteren Eckbereich der Fördervorrichtung 1 durch drei bogenförmig gestalte Gleitschiene 51, 52, 53 gebildet, über die sich jeweils ein Zahnriemen 1 a, 1 b, 1 c bewegt, wobei der an diesem Eckbereich außen umlaufende Führungskanal 40 in seinem Biegeradius weitgehend dem Biegeradius dieser Gleitschienen 51, 52, 53 entspricht.

Dadurch, dass die drei endlos umlaufenden Zahnriemen 1 a, 1 b, 1 c jeweils mit ihrer eigenen als Servomotor ausgebildeten Antriebseinheit 11, 12, 13 versehen sind, können die auf den drei Zahnriemen 1a, 1b, 1c befestigten Mitnehmerpaare 2', 3', 4', 5', 6', 7', 8', 9', 10' unabhängig voneinander bewegt werden. Dieser unabhängige Antrieb der drei Zahnriemen 1a, 1b, 1c mittels drei unabhängig voneinander ansteuerbarer Servomotoren 11, 12, 13 erlaubt es somit, die Mitnehmerpaare 2', 3', 4', 5', 6', 7', 8', 9', 10' der drei Zahnriemen 1a, 1b, 1c relativ zueinander zu verfahren, d. h. die parallel zur Förderrichtung gelegenen Abstände zwischen den Mitnehmerpaaren unterschiedlicher Zahnriemen 1a, 1b, 1c können unterschiedlich gewählt werden und während eines Förderzyklus können diese Abstände sogar je nach Position der Mitnehmerpaare variabel eingestellt werden.

Diese variable Einstellung der Abstände zwischen den Mitnehmerpaaren 2', 3', 4', 5', 6', 7', 8', 9', 10' verschiedener Zahnriemen 1a, 1b, 1c wird dadurch ermöglicht, dass die Riemenumlaufgeschwindigkeit des jeweiligen Zahnriemens 1a, 1b, 1c je nach Eingriffssituation der darauf befestigten Mitnehmerpaare unterschiedlich eingestellt ist, wobei die Geschwindigkeit eines
Zahnriemens 1a, 1b, 1c während eines voll- ständigen Umlaufs mehrfach wechseln kann, d. h. der Zahnriemen 1a, 1b, 1c wird periodisch wiederkehrend beschleunigt, abgebremst, wieder beschleunigt usw.

Werden an der Aufnahmeposition 14 zwischen den Mitnehmern eines Mitnehmerpaares 2' eine Anzahl Einzelprodukte P nacheinander als Produktstange G angeordnet, so muss während dieses Einstapelvorganges die Umlaufgeschwindigkeit des Zahnriemens 1a auf eine Geschwindigkeit gedrosselt sein, die der Geschwindigkeit dieses Einstapelvorganges entspricht.

In Figur 10 muss die Fördergeschwindigkeit des ersten, vorderen Zahnriemens 1a auf eine solche, mit der vorgelagerten Verpackungsmaschine synchrone Anstapelgeschwindigkeit reduziert werden, wobei sich die übrigen beiden Mitnehmerpaare 3', 4' dieses ersten Zahnriemens 1a zwangsläufig ebenfalls nur mit dieser reduzierten, synchronisierten Geschwindigkeit fortbewegen, da die drei Mitnehmerpaare 2', 3', 4' auf dem jeweiligen Zahnriemen 1a jeweils fest und gleichmäßig beabstandet zueinander angeordnet sind.

In der in Figur 10 dargestellten Situation muss der erste, vordere Zahnriemen 1a so lange eine reduzierte, auf den Anstapelprozess synchronisierte Geschwindigkeit beibehalten, bis das Anstapeln der Einzelprodukte P zur vollständigen Produktstange G an der Aufnahmestation 14 abgeschlossen ist, d. h. bis der obere Mitnehmer des mit der Aufnahmestation 14 in Eingriff stehenden Mitnehmerpaares 2' das obere, offene Stirnende des Führungskanales 40 erreicht hat. Sobald der obere Mitnehmer des Mitnehmerpaares 2 ebenfalls nach unten in den produktführenden Kanal 40 abgetaucht ist und somit eine vollständige Produktstange G zwischen dem Mitnehmerpaar 2' eingefügt ist, kann der Zahnriemen 1 a wieder über den zugeordneten Servoantrieb 11 auf eine erhöhte Fördergeschwindigkeit beschleunigt werden.

Der Führungskanal 40 ist so gestaltet, dass er sich in seiner Breitenabmessung nur über den mittleren der drei Zahnriemen 1b erstreckt und demzufolge müssen auch die Mitnehmerpaare 2', 3', 4', 5', 6', 7', 8', 9', 10' der drei nebeneinander angeordneten Zahnriemen 1a, 1b, 1c so geformt sein, dass sie ebenfalls jeweils oberhalb des mittleren der drei Zahnriemen 1 b angeordnet sind, um jeweils durch die obere Stirnöffnung in den Führungskanal 40 zur Aufnahme und Weiterförderung der Produktstapel G eindringen zu können.

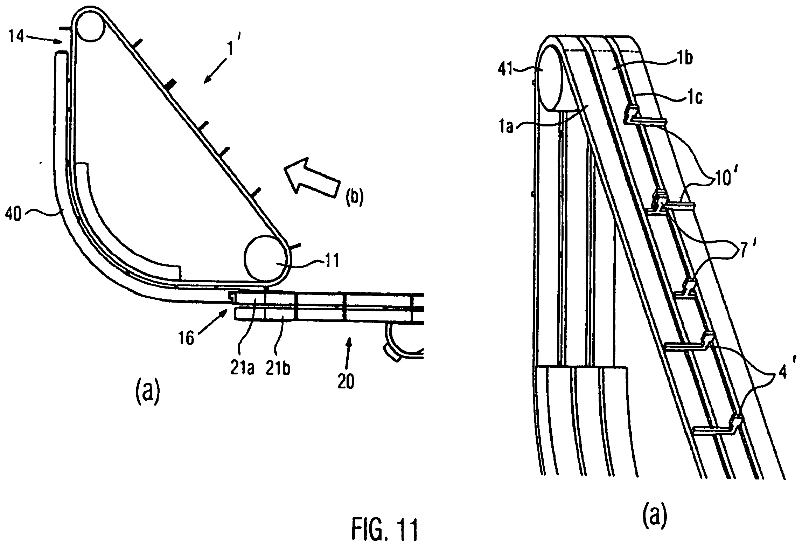

Diese vorteilhafte Gestaltung der Mitnehmer wird im folgenden anhand der Figur 11 (b) näher erläutert, welche eine perspektivische Detailansicht auf den oberen Umlenkbereich der Fördervorrichtung 1' entsprechend einer Ansicht in Richtung des Pfeiles "(b)" aus Figur 11 (a) enthält. Die Mitnehmerpaare 4', 7', 10' der drei verschiedenen Zahnriemen 1a, 1b, 1c sind
jeweils deckungsgleich in einer Flucht hinterei- nander angeordnet. Dazu sind die Mitnehmerpaare 4', 10' des ersten, vorderen und des dritten, hinteren Zahnriemens 1a, 1c jeweils L-förmig so weit verlängert, dass sie jeweils bis oberhalb des mittleren Zahnriemens 1b reichen, um die zwischen den Mitnehmerpaaren 4', 7', 10' einzufügenden Produktstangen G unabhängig vom jeweils aktiven Zahnriemen 1a, 1b, 1c entlang einer gemeinsamen, oberhalb des mittleren Zahnriemens 1b gelegenen Förderlinie transportieren zu können.

In den Figuren 10 bis 12 ist das Ausführungsbeispiel einer Fördervorrichtung 1 mit drei parallelen Zahnriemen 1a, 1b, 1c dargestellt, wobei jedoch die Zahl der Zahnriemen 1a, 1b, 1c auch variieren kann, solange gewährleistet bleibt, dass sich zumindest zwei Mitnehmerpaare relativ zueinander verfahren lassen, um den Abstand zwischen ihnen variabel an den jeweils geforderten Arbeitsablauf anpassen zu können. Daher sind jedoch immer zumindest zwei, unabhängig voneinander antreibbare Zahnriemen erforderlich, die jeweils mit zumindest einem, den zu fördernden Gegenstand aufnehmenden Mitnehmerpaar ausgestattet sind. Auch muss die Übertragung der Förderbewegung von den Antriebseinheiten 11, 12, 13 auf die Mitnehmerpaare 2', 3', 4', 5', 6', 7', 8', 9', 10' nicht unbedingt, wie in den dargestellten Ausführungsbeispielen gezeigt, unter Zuhilfenahme von Zahnriemen 1a, 1b, 1c erfolgen, sondern es sind auch andere konstruktive Ausführungen von Förderern denkbar, wie zum Beispiel bewegte Ketten, rotierende Scheiben, rotierende Räder etc.

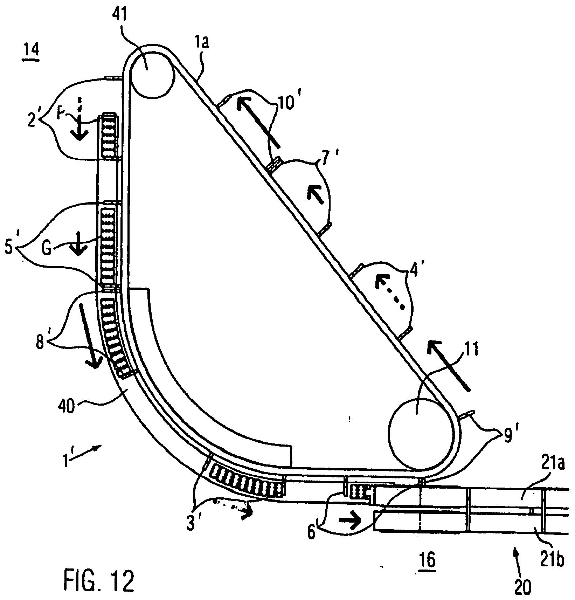

Die Funktionsweise der Fördervorrichtung 1 wird nun nochmals eingehend unter Bezugnahme auf die Seitenansicht gemäß Figur 12 erläutert, wobei die schematisch eingezeichneten Pfeile in dieser Zeichnung die drei unterschiedlichen Geschwindigkeitsstufen symbolisieren sollen, mit der sich die jeweils daneben angeordneten Mitnehmerpaare 2', 3', 4', 5', 6', 7', 8', 9', 10' in Förderrichtung fortbewegen.

An einer Aufnahmestation 14 wird zwischen das Mitnehmerpaar 2' des ersten Zahnriemens 1a eine Produktstange G angestapelt. An einer Übergabestation 16 werden die Produktstangen G aus dem Mitnehmerpaar 6' eines zweiten Förderriemens 1 b entnommen und an eine nachfolgende Fördereinheit 20 übergeben. Nach Produktabgabe werden die geleerten Mitnehmerpaare 9', 4', 7', 10' aus der Übergabestation 16 heraus entlang der schräg ansteigenden Flanke der Fördervorrichtung 1 zurück zur Aufnahmestation 14 geführt, damit dort zwischen dem als "Aufnahmetasche" dienenden Mitnehmerpaar 9', 4', 7', 10' wieder eine neue Produktstange G eingestapelt werden kann.

Durch die dreisträngige Ausführung der Fördervorrichtung 1 wird es ermöglicht, dass das an der Aufnahmestation 14 erfolgende Aufnehmen (Anstapeln) der Produktstange G weitgehend unabhängig von dem an der Übergabestation 16 erfolgenden Abgeben der Produktstange G stattfindet, da die Mitnehmerpaare 2', 6' die mit diesen beiden Stationen 14, 16 im Eingriff stehen, unterschiedlichen Zahnriemen 1a, 1 b zugeordnet sind.

In der Figur 12 sind die unterschiedlichen Geschwindigkeiten der drei einzelnen Zahnriemen 1a, 1b, 1c und der jeweils damit verbundenen Mitnehmerpaare 2', 3', 4', 5', 6', 7', 8', 9', 10' durch Pfeile verdeutlicht, wobei die punktiert dargestellten Pfeile symbolisch für eine niedrige Geschwindigkeitsstufe, die durchgezogenen, kurzen Pfeile symbolisch für eine mittlere Geschwindigkeitsstufe und die durchgezogenen, langen Pfeile symbolisch für eine hohe Geschwindigkeitsstufe stehen.

Die mit den punktieren Pfeilen versehenen Mitnehmerpaare 2', 3', 4' sind mit dem ersten Zahnriemen 1a verbunden (vgl. Figur 10), der von seinem zugehörigen Antrieb 11 lediglich mit einer geringen, konstanten Geschwindigkeit beaufschlagt wird. Der erste Zahnriemen 1a wird deshalb nur mit einer geringen Geschwindigkeit fortbewegt, weil sich eines seiner Mitnehmerpaare 2' gerade an der Aufnahmestation 14 befindet und daher dieses Mitnehmerpaar 2' in seiner vertikal nach unten gerichteten Förderbewegung genau auf den vorher angeordneten "Anstapelkopf" (Wendekopf 35) der Einzelverpackungsmaschine synchronisiert sein muss, um das Anstapeln innerhalb dieses Mitnehmerpaares 2' fehlerfrei zu realisieren. Die beiden übrigen Mitnehmerpaare 3', 4' des Zahnriemens 1a befinden sich zwar nicht im Eingriff mit der Aufnahme- oder Übergabestation 14, 16, jedoch folgt ihre Geschwindigkeit derjenigen des Zahnriemens 1 a, die von der Anstapelgeschwindigkeit bestimmt wird.

Der zweite, mittlere Zahnriemen 1 b bewegt sich indes mit einer mittleren, konstanten Geschwindigkeit (kurzer durchgezogener Pfeil), die dadurch bestimmt wird, dass eines seiner Mitnehmerpaare 6' gerade die Übergabestation 16 an der unteren, rechten Umlenkung der Fördervorrichtung 1 erreicht hat. Um eine durchgehend störungsfreie Übergabe der Produktstange G von der Fördervorrichtung 1 auf die nachgelagerte Fördereinheit 20 zu erreichen, muss der zweite, mittlere Riemen 16 mit einer Geschwindigkeit umlaufen, die an die Riemenumlaufgeschwindigkeit der nachgelagerten Fördereinheit 20 angeglichen (synchronisiert) ist.

Auch hier sind die beiden weiteren Mitnehmerpaare 5', 7' des zweiten Zahnriemens 1 b zwar außer Eingriff mit Aufnahme- oder Übergabestation 14, 16, wobei jedoch ihre Geschwindigkeit der mittleren Geschwindigkeit des mit der Übergabestation 16 im Eingriff befindlichen Mitnehmerpaares 6' entspricht, da die drei Mitnehmerpaare 5', 6', 7' auf einem gemeinsamen Zahnriemen 1b befestigt sind.

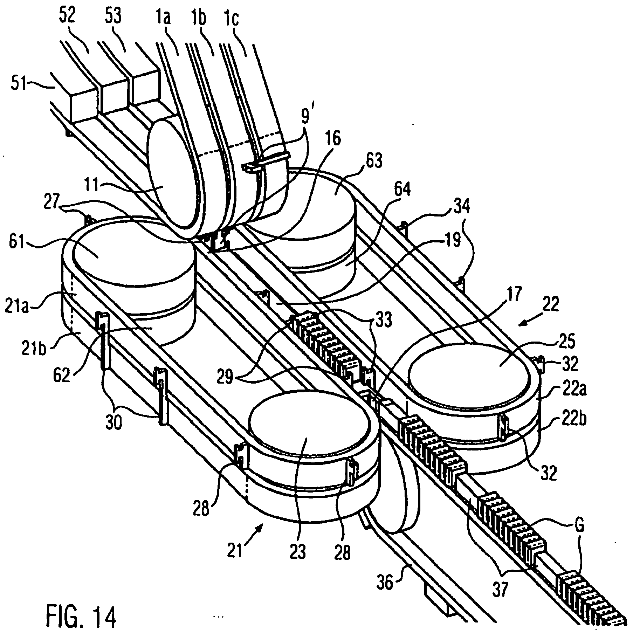

Der dritte, hintere Zahnriemen 1c (vgl. auch Figur 14) verlässt hingegen mit einem seiner Mitnehmerpaare 9' gerade die am rechten unteren Umlenkpunkt gelegene Übergabestation 16. Das Mitnehmerpaar 9' ist somit geleert und führt keine Produktstange G mehr mit sich. Auch die beiden weiteren Mitnehmerpaare 8', 10' des dritten Zahnriemens 1c befinden sich weder mit der Aufnahme- noch mit der Übergabestation 14, 16 im Eingriff, so dass diese drei Mitnehmerpaare 8', 9', 10' und der zugehörige dritte Zahnriemen 1c mit einer von angrenzenden Baugruppen unbeeinflussten Geschwindigkeit bewegt werden können. Der dritte Zahnriemen 1c wird dabei von der entsprechenden Antriebeseinheit 13 so beschleunigt, dass das noch an der schräg hochlaufenden Flanke der Fördervorrichtung 1' befindliche Mitnehmerpaar 10' mit hoher Geschwindigkeit (symbolisiert durch langen durchgezogenen Pfeil) das noch mit der Aufnahmestation 14 im Eingriff stehende Mitnehmerpaar 2' des ersten Zahnriemens 1a einholt, so dass dieses auf hohe Geschwindigkeit beschleunigte Mitnehmerpaar 10' das vorauseilende, sich mit niedriger Geschwindigkeit fortbewegende Mitnehmerpaar 2' des ersten Zahnriemens 1a einholt, und zwar noch bevor dieses mit einer vollständigen Produktstange G aufgefüllt worden ist.

Nachdem das Mitnehmerpaar 10' des dritten Zahnriemens 1c das vorauseilende Mitnehmerpaar 2' des ersten Zahnriemens 1a eingeholt hat, folgt der dritte Zahnriemen 1c dem Bewegungsprofil des ersten Zahnriemen 1a, das heißt die Geschwindigkeit des dritten Zahnriemens 1c wird auf die mit der Aufnahmestation 14 synchronisierte Geschwindigkeit des ersten Zahnriemens 1 a abgebremst. Somit kann, nachdem das Mitnehmerpaar 2' des ersten Zahnriemens 1 a vollständig mit Produkten P aufgefüllt worden ist, sofort im Anschluss das Mitnehmerpaar 10' des dritten Zahnriemens 1c durch Anstapeln der Einzelprodukte P gefüllt werden, ohne dass die vorgelagerte Einzelverpackungsmaschine auf das nächste Mitnehmerpaar 10' der Fördervorrichtung 1 warten muss, wodurch eine kontinuierliche Abführung der verpackten Einzelprodukte P aus der Einzelverpackungsmaschine gewährleistet wird.

Gleiches gilt auch für die Übergabe von Produktstangen G an der Übergabestation 16, da hier das Mitnehmerpaar 6' des zweiten, mittleren Zahnriemens 1b noch vor dem Verlassen der Übergabestation 16 von dem nachfolgenden Mitnehmerpaar 3' des ersten Zahnriemens 1 a eingeholt werden wird, so dass auch eine kontinuierliche Produktabgabe über die Übergabestation 14 an die Fördereinheit 20 und die daran anschließende Stangenverpackungsmaschine gewährleistet wird.

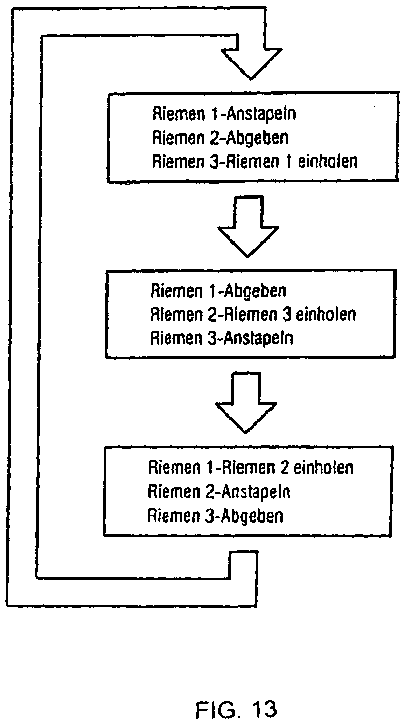

In der Figur 13 sind in Form eines Ablaufdiagrammes die periodisch wiederkehrenden Prozessschritte in einer erfindungsgemäßen Fördervorrichtung 1 gemäß den Figuren 10 bis 12
dargestellt. Der erste Prozessschritt entspricht der Ausgangssituation, wie sie sich in der Figur 12 darstellt und wie sie in den vorangehenden Abschnitten erläutert wurde, während in dem daran anschließenden Prozessschritt ein Mitnehmerpaar 3' des ersten Zahnriemens 1a mit der Übergabestation 16 im Eingriff steht, ein Mitnehmerpaar 10' des dritten Zahnriemens 1c mit der Aufnahmestation 14 im Eingriff steht und der zweite Zahnriemen 1 b auf die höchste Geschwindigkeitsstufe beschleunigt wird, damit sein entleertes Mitnehmerpaar 7 das Mitnehmerpaar 10 des dritten Zahnriemens 1c an der Aufnahmestation 14 einholt.

In einem dritten Prozessschritt schließlich wird ein Mitnehmerpaar 8' des dritten Zahnriemens 1c mit der Übergabestation 16 zur Abgabe der Produktstange G in Eingriff gebracht, während ein Mitnehmerpaar 7' des zweiten Zahnriemens 1b mit der Aufnahmestation 14 zum Einstapeln einer neuen Produktstange G im Eingriff steht und ein entleertes Mitnehmerpaar 4' des ersten Zahnriemens 1a auf eine hohe Geschwindigkeit beschleunigt wird, um das in der Aufnahmestation 14 befindliche Mitnehmerpaar 7' des zweiten Zahnriemens 1b einzuholen.

Der in der Fördervorrichtung 1' ablaufende Bewegungszyklus beginnt anschließend wieder von vorne mit dem ersten Prozessschritt, wie er in Figur 11 dargestellt ist, wobei an einem solchen Bewegungszyklus der Fördervorrichtung 1' insbesondere von Vorteil ist, dass die Bewegung des Riemens 1a, der mit der Aufnahmestation 14 zum Anstapeln von Produkten P in Eingriff steht, von der Bewegung des Riemens 1b, der mit der Übergabestation 16 zur Abgabe von Produktstangen G im Eingriff steht, vollständig entkoppelt ist, so dass es möglich ist, mit dem zu füllenden Mitnehmerpaar 2' so lange in der Aufnahmestation 14 zu warten, bis das Mitnehmerpaar 2' komplett und somit fehlerfrei gefüllt ist (= "intelligentes" Anstapeln).

Ein solches Warten kann zum Beispiel bei einem Leertakt in der vorgelagerten Einzelverpackungsmaschine notwendig werden, wobei trotz dieses Wartens des Mitnehmerpaares 2' an der Aufnahmestation 14 die Abgabe von Produktstangen G an die nachgelagerte Fördereinheit 20 ungehindert durchgeführt werden kann, da die an der Aufnahme- und Übergabestation 14, 16 befindlichen Mitnehmerpaare 2', 6' auf unterschiedlichen, unabhängig voneinander antreibbaren Zahnriemen 1a, 1b befestigt sind.

Die Fördervorrichtung 1' stellt somit ein begrenztes Zwischenpuffer zur Verfügung, um Störungen in den vor- oder in den nachgelagerten Baugruppen (Verpackungsmaschinen) zumindest zeitweise kompensieren zu können, ohne dass die jeweils andere Baugruppe von diesen Störungen negativ beeinflusst wird.

In Figur 14 ist in einer perspektivischen Ge- samtdarstellung die Fördereinheit 20 dargestellt, an welche die Produktstangen G von der vorgelagerten Fördervorrichtung 1' abgegeben werden, wobei die Fördereinheit 20 ihrerseits die übernommen Produktstangen G an eine nachgelagerte Mitnehmerkette 36, die bereits einen Bestandteil der Stangenverpackungsmaschine bildet, übergibt.

An einer Aufnahmestation 16 werden die Produktstangen G aus dem Mitnehmerpaar 6 der vorgelagerten Fördervorrichtung 1' entnommen, um von zwei einander gegenüberliegenden Mitnehmerpaaren 27, 31 der Fördereinheit 20 weitergefördert zu werden. Die Fördereinheit 20 setzt sich wiederum aus zwei einander gegenüberliegenden, durch einen Förderspalt 18 voneinander getrennten Fördervorrichtungen 21, 22 zusammen, die sich von der vorgelagerten Fördervorrichtung 1' gemäß den Figuren 10 bis 12 lediglich in der Anzahl ihrer Riemen 21a, 21b, 22a, 22b, Mitnehmerpaare 27, 28, 29, 30, 31, 32, 33, 34 und Umlenkpunkte unterscheiden, aber sonst auf dem gleichen Funktionsprinzip beruhen. In dem Förderspalt 18 zwischen den beiden Fördervorrichtungen 21, 22 der Fördereinheit 20 ist zusätzlich eine Gleitschiene 19 angeordnet, auf der die von der Fördervorrichtung 1 übernommenen Produktstangen G abgelegt werden, um sie dann mit den einander gegenüberliegenden Mitnehmerpaaren 29, 33 der Fördereinheit 20 in horizontaler Richtung schiebend weiterzubewegen.

An einer Übergabestation 17 werden die Produktstangen G schließlich von der Gleitschiene 19 der Fördereinheit 20 auf die Mitnehmerkette 36 einer nachgelagerten Verpackungsmaschine geschoben, wobei in hier nicht dargestellten, weiteren Baugruppen dieser Verpackungsmaschine die Produktstangen G außen mit einer Zweitverpackung versehen werden.

Die Produktstangen G setzen sich aus zehn verpackten Einzelprodukten P zusammen, die in der Fördereinheit 20 vertikal von der Gleitschiene 19 abgestützt und horizontal vorne und hinten zwischen den Mitnehmerpaaren 29, 33 der einander gegenüberliegenden Fördervorrichtungen 21, 22 gehalten sind. Diese beiden Fördervorrichtungen 21, 22 der Fördereinheit 20 bestehen jeweils aus zwei parallel zueinander verlaufenden, vertikal übereinander angeordneten Zahnriemen 21a, 21 b, 22a, 22b und zwar aus einem ersten Zahnriemen 21 a, 22a, der in einer Ebene oberhalb der Gleitschiene 19 positioniert ist, und einem zweiten Zahnriemen 21b, 22b, der in einer Ebene unterhalb der Gleitschiene 19 positioniert ist. Auf jedem Zahnriemen 21a, 21b, 22a, 22b sind zwei Mitnehmerpaare 27, 28, 29, 30, 31, 32, 33, 34 befestigt, die die Bewegung des Zahnriemens 21a, 21b, 22a, 22b auf die Produktstangen G übertragen und gleichmäßig entlang der Länge des Riemens 21a, 21b, 22a, 22b voneinander beabstandet sind.

Die Zahnriemen 21a, 21b, 22a, 22b durchlaufen jeweils eine endlose Schleife und sind über zwei Umlenkpunkte geführt. Der erste Umlenkpunkt ist durch eine Umlenkrolle 61, 62, 63, 64 gebildet, während der zweite Umlenkpunkt von einem Antriebsritzel, beispielsweise dem Antriebsritzel einer servomotorischen Antriebseinheit 23, 24, 25, 26 gebildet ist, wobei der Zahnriemen 21a, 21b, 22a, 22b um die Umlenkrolle 61, 62, 63, 64 bzw. um das Antriebsritzel 23, 24, 25, 26 jeweils mit einem Umschlingungswinkel von 180° geführt ist.

In analoger Weise zu der vorgelagerten Fördervorrichtung 1 gemäß den Figuren 10 bis 12 sind auch die endlos umlaufenden Zahnriemen 21a, 21b, 22a, 22b der die Fördereinheit 20 bildenden Fördervorrichtungen 21, 22 mit einer jeweils eigenen Antriebseinheit 23, 24, 25, 26 ausgestattet. Als Antrieb dient bevorzugt ein Servomotor 23, 24, 25, 26, so dass die insgesamt vier Zahnriemen 21a, 21b, 22a, 22b der Fördereinheit 20 (je zwei Zahnriemen pro Fördervorrichtung 21, 22) und die auf diesen Zahnriemen 21a, 21b, 22a, 22b jeweils befestigten zwei Mitnehmerpaare 27, 28, 29, 30, 31, 32, 33, 34 unabhängig voneinander bewegt werden können.

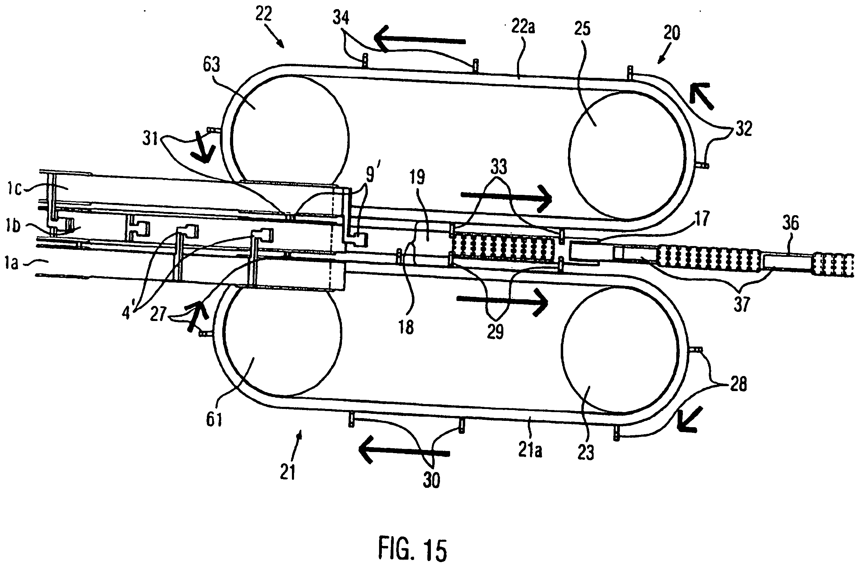

Die beiden Fördervorrichtungen 21, 22 der Fördereinheit 20 gemäß den Figuren 14 und 15 bilden somit einen doppelten Zwei-Zug-Riemen und sind derart zueinander angeordnet, dass die beiden Zahnriemen 21a, 21b, 22a, 22b der beiden Fördervorrichtungen 21, 22 sich jeweils parallel auf einer gemeinsamen vertikalen Ebene gegenüberliegen, das heißt der obere Zahnriemen 21a der ersten Fördervorrichtung 21 liegt parallel gegenüber dem oberen Zahnriemen 22a der zweiten Fördervorrichtung 22 und der untere Zahnriemen 21b der ersten Fördervorrichtung 21 liegt parallel gegenüber dem unteren Zahnriemen 22b der zweiten Fördervorrichtung 22.

Dabei sind die beiden Antriebseinheiten 23, 25 der jeweils oberen Zahnriemen 21a, 22a und die beiden Antriebseinheiten 24, 26 der jeweils unteren Zahnriemen 21b, 22b derart miteinander (mechanisch oder elektrisch) gekoppelt, dass sie mit gleicher Antriebsdrehzahl rotieren, so dass die einander gegenüberliegenden oberen bzw. unteren Zahnriemen 21a, 22a, 21b, 22b der beiden Fördervorrichtungen 21, 22 jeweils immer völlig synchron zueinander mit gleicher Geschwindigkeit bewegt werden.

Die an den Zahnriemen 21a, 21b, 22a, 22b angebrachten Mitnehmerpaare 27, 28, 29, 30, 31, 32, 33, 34 sind dabei so angeordnet, dass sich die Mitnehmerpaare der beiden oberen Zahnriemen 21a, 22a bzw. der beiden unteren Zahnriemen 21b, 22b jeweils im Förderspalt 18 fluchtend gegenüberliegen, d. h. die beiden in Förderrichtung gesehen vorderen Mitnehmer des Mitnehmerpaares 29, 33 und die beiden in Förderrichtung gesehen hinteren

Mitnehmer des Mitnehmerpaares 29, 33 liegen an beiden Seiten des Förderspalts 18 einander paarweise gegenüber. Die Produktstangen G werden somit im Förderspalt 18 gemeinsam durch die Mitnehmerpaare 29, 33 der beiden Fördervorrichtungen 21, 22, also durch insgesamt vier Mitnehmer (zwei vorne und zwei hinten) gehalten und auf der Gleitschiene 19 in horizontaler Richtung zur Mitnehmerkette 36 weitergefördert.

Im dargestellten Ausführungsbeispiel der Fördereinheit 20 nach den Figuren 14 und 15 besitzt jeder Zahnriemen 21a, 21b, 22a, 22b zwei Mitnehmerpaare 27, 28, 29, 30, 31, 32, 33, 34, die entlang des Riemenverlaufes einander diametral gegenüberliegend angeordnet sind, d. h., während das Mitnehmerpaar 27, 31 eines Zahnriemens 21a, 22a mit der Aufnahmestation 16 in Eingriff gelangt, verlässt das andere Mitnehmerpaar 28, 32 des entsprechenden Zahnriemens 21a, 22a gerade die Übergabestation 17. Die Mitnehmerpaare 27, 28, 29, 30, 31, 32, 33, 34 des oberen und unteren Zahnriemens 21a, 21b, 22a, 22b einer Fördervorrichtung 21, 22 sind in ihrer relativen Position entlang des Riemenverlaufes um 90° zueinander versetzt, d. h. während sich die Mitnehmerpaare 27, 28, 31, 32 des oberen Zahnriemens 21a, 22a gerade beim Eintritt bzw. Austritt aus der Aufnahme- bzw. Übergabestation 14, 16 befinden, sind die Mitnehmerpaare 29, 30, 33, 34 des unteren Zahnriemens 21b, 22b eingriffsfrei mittig auf den parallelen Seitenflanken des Zahnriemens 21b, 22b beim Stangentransport auf der Gleitschiene 19 bzw. produktfrei auf der von der Gleitschiene 19 abgewandten Seite angeordnet.

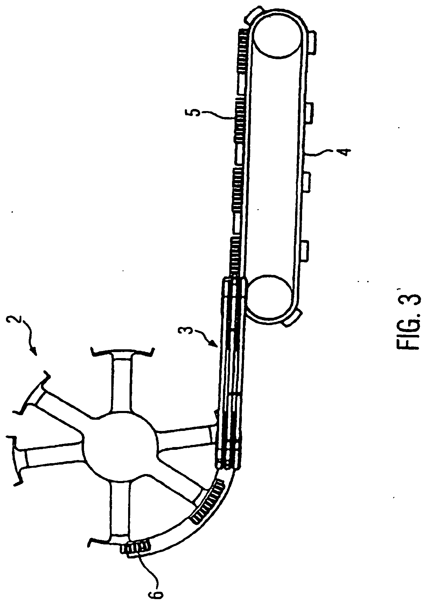

Mit Bezug auf Figur 15 soll schließlich noch die Funktionsweise der Fördereinheit 20 im Betriebszustand erläutert werden. Die Funktionsweise der Fördereinheit 20 ist weitestgehend ähnlich zu derjenigen, der unter Bezugnahme auf Figur 15 geschilderten Funktionsweise der Fördervorrichtung 1', da die Fördereinheit 20 ihrerseits aus zwei Fördervorrichtungen 21, 22 aufgebaut ist, die sich vom Ausführungsbeispiel der Fördervorrichtung 1 nach den Figuren 3 bis 5 vor allem dadurch unterscheiden, dass die Fördervorrichtungen 21, 22 in der Fördereinheit 20 als Zwei-Zug-Riemen ausgeführt sind, während die vorgelagerte Fördervorrichtung 1 als Drei-Zug-Riemen ausgeführt ist. Allerdings wäre es auch möglich, je nach Einsatzfall, die Fördervorrichtungen 21, 22 der Fördereinheit 20 aus drei oder mehr Riemen oder sonstigen Förderern (Ketten, Scheiben, Rädern...) aufzubauen, solange die relative Anordnung der beiden Fördervorrichtungen 21, 22, zueinander eingehalten wird.

Gemäß Figur 15 sind zwei aufeinander synchronisierte Mitnehmerpaare 27, 31 des ersten, oberen Zahnriemens 21a, 22a der beiden Fördervorrichtungen 21, 22 gerade dabei, in die Aufnahmestation 14 einzutreten, um eine Produktstange G aus der vorgelagerten Fördervorrichtung 1 zu übernehmen. Demzufolge muss die Geschwindigkeit des oberen Zahnriemens
21a, 22a der beiden Fördervorrichtungen 21, 22 auf eine Aufnahmegeschwindigkeit gedrosselt werden, die zu der Übergabegeschwindigkeit der vorgelagerten Fördervorrichtung 1 synchron ist. Das andere Mitnehmerpaar 28, 32 des oberen Zahnriemens 21a, 22a hat jeweils gerade die Übergabestation 16 zur nachgelagerten Mitnehmerkette 36 verlassen, ist geleert und steht außer Eingriff, wobei jedoch seine Geschwindigkeit durch die gedrosselte Geschwindigkeit des mit der Aufnahmestation 14 im Eingriff befindlichen Mitnehmerpaares 27, 31 mitbestimmt wird, weshalb sich beide Mitnehmerpaare 27, 28, 31, 32 des oberen Zahnriemens 21a, 22a nur mit reduzierter Geschwindigkeit (verdeutlicht durch ein kurzes Pfeilsymbol) fortbewegen.

Ein Mitnehmerpaar 29, 33 des zweiten, unteren Zahnriemens 21b, 22b befindet sich mit einer eingefügten Produktstange G auf der Gleitschiene 19 und beschleunigt diese Produktstange G mit hoher Geschwindigkeit (verdeutlicht durch ein langes Pfeilsymbol), um sie an die gerade frei gewordene Übergabestation 17 zu bringen und die Produktstange G dort in das nächste freie Aufnahmeintervall zwischen den Abstandshaltern 37 der Mitnehmerkette 36 einzulegen. Sobald dieses Mitnehmerpaar 29, 33 die Übergabeposition 17 erreicht hat, wird die Umlaufgeschwindigkeit des zweiten, unteren Zahnriemens 21b, 22b auf eine Übergabegeschwindigkeit abgebremst werden, die mit der Umlaufgeschwindigkeit der nachfolgenden Mitnehmerkette 36 synchronisiert ist, um so eine fehlerfreie Übergabe der Produktstange G zu realisieren.

Das andere, zweite Mitnehmerpaar 30, 34 des unteren Zahnriemens 21b, 22b läuft mit hoher Geschwindigkeit auf der der Gleitschiene 19 abgewandten Seite der Fördervorrichtung 21, 22 in einer der Förderrichtung entgegengesetzten Richtung zurück zur Aufnahmestation 14, wobei das Mitnehmerpaar 30, 34 geleert und nicht im Eingriff mit irgendeiner anderen, angrenzenden Baugruppe steht, so dass die Geschwindigkeit dieses Mitnehmerpaares 30, 34 durch die Geschwindigkeit des die Produktstange G fördernden und anschließend abgebenden Mitnehmerpaares 29, 33 bestimmt wird.

Zum gleichen Zeitpunkt zu dem das Mitnehmerpaar 29, 33 die Übergabestation 17 erreicht und die Produktstange G an die nachfolgende Mitnehmerkette 36 abgibt, wird das andere Mitnehmerpaar 30, 34 des unteren Zahnriemens 21b, 22b das vorauseilende Mitnehmerpaar 27, 31 des oberen Zahnriemens 21a, 22a an der Aufnahmestation 14 eingeholt haben, um sofort ohne Wartezeit oder Leertakt die nächste Produktstange G von der vorausgehenden Fördervorrichtung 1 übernehmen zu können.

Die vorteilhafte Wirkungsweise der erfindungs- gemäßen Fördervorrichtung 1, und Fördereinheit 20 wird dem Fachmann, insbesondere durch die schematischen Visualisierungen der Figuren 12 und 15, in denen die relativen Positionen und Geschwindigkeiten der Mitnehmerpaare 2 bis 10, 27 bis 34 entlang des Riemenverlaufes für einen Betriebszustand exemplarisch dargestellt wurden, sofort begreiflich. Durch eine derartige Fördervorrichtung 1 bzw. Fördereinheit 20 wird eine Verkettung von Verarbeitungsschritten, wie insbesondere von Erst- und Zweitverpackungsprozess, ermöglicht, ohne dass die vor- und nachgelagerten Verarbeitungsmaschinen durch diese Verkettung in ihrer Auslastung negativ beeinflusst werden (d. h. kein Ausführen von Leertakten und kein Anhalten erforderlich).

## Patentansprüche

1. Verfahren zur Bildung von Artikelstangen (2.04; 3.04; 5; G) aus Einzelartikeln (P; 6), insbesondere für Stangenverpackungen, wobei vereinzelte, vorzugsweise verpackte Artikel (P; 6) von einer Abgabeeinrichtung (1; 35) an eine Artikelstangen-Bildungseinrichtung (2; 1') übergeben werden, in der eine vorbestimmte Anzahl von Einzelartikeln (P; 6) zu einer Artikelstange (2.04; 3.04; 5; G) gruppiert werden und diese Artikelstange (2.04; 3.04; 5; G) an eine Übergabeeinrichtung (3; 20) zu einer Stangen-Längsfördereinrichtung (4; 36) übergeben wird, wobei in Abhängigkeit von einem Beginn der Bereitstellung einer vorbestimmten Anzahl von Einzelartikeln (6; P) und/oder von einem Zeitraum, der zur Gruppierung der vorbestimmten Anzahl von Einzelartikeln (6; P) zu einer Artikelstange (2.04; 3.04; 5; G) benötigt wird oder zur Verfügung steht, eine Mehrzahl von Artikelstangebildnern (2a, 2b, 2c; 1 a, 1 b, 1 c) der Artikelstangen-Bildungseinrichtung (2; 1') zur Gruppierung der Einzelartikel (P; 6) zu einer Artikelstange (2.04; 3.04; 5; G) und zur Übergabe der Artikelstange (2.04; 3.04; 5; G) an die Übergabeeinrichtung (3; 20) separat und unabhängig voneinander angesteuert werden **dadurch gekennzeichnet, dass** die Übergabeeinrichtung (3; 20) aus einer Mehrzahl einzelner, unabhängig voneinander ansteuerbarer Übergabeförderer (3.11, 3.21, 3.31; 21 a, 21 b, 22a, 22b) besteht, wobei die Anzahl der Übergabeförderer (3.11, 3.21, 3.31; 21a, 21b, 22a, 22b) der Anzahl der Artikelstangenbildner (2a, 2b, 2c; 1 a, 1 b, 1 c) der Artikelstangen-Bildungseinrichtung (2; 1') entspricht.

2. Verfahren nach Anspruch 1, wobei die Artikelstangenbildner (2a, 2b, 2c; 1 a, 1 b, 1 c) der Artikelstangen-Bildungseinrichtung die Einzelartikel (2.04; 3.04; 5; G) in einer übereinstimmenden Übergabe- oder Aufnahmeposition (2.01, 2.03; 3.03) aufnehmen.

3. Verfahren nach Anspruch 1 oder 2, wobei die Einzelartikel (P; 6) von einem Wendekopf (1; 35) einer kontinuierlichen Verpackungsmaschine in einer definierten Übergabeposition bereitgestellt werden, die Einzelartikel (P; 6) in einer vorbestimmten Anzahl von einem Artikelstangenbildner (2a, 2b, 2c) einer vorzugsweise als Gruppierrad (2) ausgebildeten Artikelstangen-Bildungseinrichtung aufgenommen und an die Übergabeeinrichtung (3) übergeben und von dieser vorzugsweise äquidistant an eine Zuführungskette oder einen Zuführungslängsförderer (4) einer Sammelverpackungsmaschine, insbesondere einer Flowpack-Maschine übergeben werden.

4. Verfahren nach einem der vorhergehenden Ansprüche 1 bis 3, wobei Abstände zwischen Artikelstangen (2.04; 3.04; 5; G) variabel einstellbar sind und eine kontinuierliche oder diskontinuierliche Übergabe von Artikelstangen (2.04; 3.04; 5; G) an eine nachgeordnete Fördereinrichtung oder Verpackungsmaschine bzw. Verpackungsstrecke erfolgen kann und ein intelligentes Anstapeln in der Artikelstangen-Bildungseinrichtung (2; 1'), vorzugsweise einem mehrere Artikelstangenbildner (2a, 2b, 2c) aufweisenden Gruppierrad (2) erfolgt und stets vollständige, eine vorbestimmte Anzahl von Einzelartikeln (P; 6) enthaltende Artikelstangen (2.04; 3.04; 5; G) gebildet werden, unabhängig von vorhergehenden Leertakten im Verpackungsprozess.

5. Verfahren nach einem der vorhergehenden Ansprüche 1 bis 4, wobei der Übergabeeinrichtung (3; 20), vorzugsweise unter Zwischenschaltung einer Längsfördereinrichtung (4; 36), ein Stangenpacker nachgeschaltet wird, zum Verpacken der Artikelstangen (2.04; 3.04; 5; G) in einer Zweitverpackung, wie z. B. in Falteinschlag, Fin Seal oder einer Flowpack-Verpackung.

6. Gruppiereinrichtung für kleinstückige, insbesondere in Einzelverpackungen verpackte Artikel (P; 6) zur Bildung von Artikelstangen (2.04, 3.04; 5; G) vorzugsweise zur Zuführung zu einer Stangenverpackungsmaschine, insbesondere zur Durchführung des Verfahrens nach zumindest einem der vorhergehenden Ansprüche 1 bis 5 mit einer umlaufenden Artikelstangen-Bildungseinrichtung (2; 1') und einer linearen Stangen-Übergabeeinrichtung (3; 20) zur Verbindung mit einer Stangen-Längsfördereinrichtung (4; 36), wobei vereinzelte, vorzugsweise verpackte Artikel (P; 6) von einer Abgabeeinrichtung (1; 35) an die Artikelstangen-Bildungseinrichtung (2; 1') übergeben werden, in der eine vorbestimmte Anzahl von Einzelartikeln (P; 6) zu einer Artikelstange (2.04; 3.04; 5; G) gruppiert werden und diese Artikelstange (2.04; 3.04; 5; G) an die Übergabeeinrichtung (3; 20) zu der Stangen-Längsfördereinrichtung (4; 36) übergeben wird, wobei in Abhängigkeit von einem Beginn der Bereitstellung einer vorbestimmten Anzahl von Einzelartikeln (P;6) und/oder von einem Zeitraum, der zur Gruppierung der vorbestimmten Anzahl von Einzelartikeln (P; 6) zu einer Artikelstange (2.04; 3.04; 5; G) benötigt wird oder zur Verfügung steht, eine Mehrzahl von Artikelstangenbildnern (2a, 2b, 2c; 1 a; 1b; 1 c) der Artikelstangen-Bildungseinrichtung (2; 1') zur Gruppierung der Einzelartikel (P; 6) zu einer Artikelstange (2.04, 3.04; 5, G) und zur Übergabe der Artikelstange (2.04; 3.04; 5; G) an die Übergabeeinrichtung (3; 20) separat und unabhängig voneinander angesteuert werden **dadurch gekennzeichnet, dass** die Übergabeeinrichtung (3; 20) aus einer Mehrzahl einzelner, unabhängig voneinander ansteuerbarer Übergabeförderer (3.11, 3.21, 3.31; 21a, 21b, 22a, 22b) besteht, wobei die Anzahl der Übergabeförderer (3.11, 3.21, 3.31; 21a, 21b, 22a, 22b) der Anzahl der Artikelstangenbildner (2a, 2b, 2c; 1a, 1b, 1c) der Artikelstangen-Bildungseinrichtung (2; 1') entspricht.

7. Gruppiereinrichtung nach Anspruch 6, wobei die Artikelstangen-Bildungseinrichtung ein Gruppierrad (2) ist.

8. Gruppiereinrichtung nach Anspruch 6 oder 7, wobei das Gruppierrad (2) eine Mehrzahl koaxialer, unabhängiger Gruppierradsegmente (2a, 2b, 2c bzw. 2.11, 2.21, 2.31) aufweist, wobei jedes Gruppierradsegment (2a, 2b, 2c bzw. 2.11, 2.21, 2.31) vorzugsweise unabhängig ansteuerbar ist und zumindest eine Tasche (1.1, 2,1, 3.1) zur Aufnahme von Artikeln (P; 6) aufweist, vorzugsweise die Tasche (1.1; 2.1; 3.1) in ihrer Länge im wesentlichen der Länge einer Artikelstange (2.04; 3.04; 5; G) aus einzelnen Artikeln (P; 6) entspricht.

9. Gruppiereinrichtung nach Anspruch 8, wobei die Gruppierradsegmente (2a, 2b, 2c bzw. 2.11, 2.21, 2.31) achsparallel vorzugsweise koaxial zu einer Rotation um parallele Rotationsachsen oder eine koaxiale gemeinsame Rotationsachse angeordnet, vorzugsweise durch korrespondierende Nabenabschnitte unabhängig voneinander und einzeln drehbar und antreibbar angeordnet sind, insbesondere jedes Gruppierradsegment (2a, 2b, 2c) gegenüberliegende, sich von einem Nabenabschnitt radial erstreckende Stegabschnitte aufweist, deren radial außen liegendes Ende mit einer sich in Umfangsrichtung erstreckenden Tasche (1.1; 2.1; 3.1) versehen ist, wobei vorzugsweise die Gruppierradsegmente (2a, 2b, 2c) jeweils individuell intermittierend oder kontinuierlich, vorzugsweise beschleunigt drehbar sind und vorzugweise die Taschen (1.1; 2.1; 3.1) der Gruppierradsegmente (2a, 2b, 2c) in einer gemeinsamen Rotationsebene angeordnet sind.

10. Gruppiereinrichtung nach Anspruch 9, wobei ein Abschnitt der gemeinsamen Rotationsebene durch einen rohrartigen Führungskanal (40) von insbesondere U-Profil-förmigen Querschnitt, der sich zwischen einer Artikel-Aufnahmeposition (14) des Gruppierrades (2) und einer Artikel-Abgabeposition (16) erstreckt, gebildet ist und/oder die Taschen (1.1; 2.1; 3.1) eine in Umfangsrichtung U-förmige Gestalt aufweisen.

11. Gruppiereinrichtung nach einem der vorhergehenden Ansprüche 6 bis 10, wobei die Übergabeeinrichtung (3; 20) zwischen Artikelstangenbildnern (2a, 2b, 2c; 1 a 1b; 1 c) und Artikelstangen-Längsfördereinrichtung (4; 36) aus einem Paar opponierend angeordneter Bandförderer (3; 20) besteht, von denen jeder aus einer der Anzahl der Gruppierradsegmente (2a, 2b, 2c) entsprechenden Anzahl von Taktgeberriemen oder - ketten (3.11, 3.21, 3.31; 21a, 21b, 22a, 22b) besteht, vorzugsweise die Taktgeberriemen Mitnehmer (3.11, 3.21, 3.31; 21a, 21b, 22a; 22b) zur Bildung vorzugsweise konstanter Riementaschen zur Aufnahme von Artikelstangen (2.04; 3.04; 5; G) aufweisen, zur Übergabe an eine Stangen-Längsfördereinrichtung (4; 36).

12. Gruppiereinrichtung (1) nach einem der vorhergehenden Ansprüche 6 bis 11 mit mindestens zwei parallelen, den zu fördernden Gegenstand oder die Artikel (2.04; 3.04; 5;G) bewegenden Förderern (1a, 1b, 1c), wobei jeder Förderer (1a, 1b, 1c) mit zumindest einem, vorzugsweise einem Paar beabstandet zueinander angeordneten Mitnehmern (2', 3', 4', 5', 6', 7', 8', 9', 10') verbunden ist, zwischen denen der zu fördernde Gegenstand, insbesondere ein Artikelstapel (2.04; 3.04; 5; G), aufnehmbar ist, wobei jeder Förderer (1a, 1b, 1c) mit einer separaten Antriebseinheit (11, 12, 13) verbunden ist und die Antriebseinheiten (11, 12, 13) unabhängig voneinander steuerbar sind, so dass die Fördererer (1 a, 1b, 1c) und oder die Mitnehmer (2', 3', 4', 5', 6', 7', 8', 9', 10') und/oder die Mitnehmerpaare der verschiedenen Förderer (1 a, 1 b, 1 c) relativ zueinander verlagerbar sind.

13. Gruppiereinrichtung nach Anspruch 12, wobei der Förderer (2a, 2b, 2c, 1 a, 1 b, 1 c) als Riemen, als Kette oder als rotierende Scheibe bzw. Rad ausgebildet ist, vorzugsweise die Mitnehmer (2', 3', 4', 5', 6', 7', 8', 9', 10') der verschiedenen Förderer (1 a, 1b, 1 c) in Förderrichtung fluchtend in einer Ebene liegend ausgerichtet sind, so dass die zu fördernden Gegenstände (2.04; 3.04; 5; G) oder die Artikel entlang einer gemeinsamen Förderbahn gefördert werden, insbesondere die Mitnehmerpaare (2', 3', 4', 5', 6', 7', 8', 9', 10') so ausgerichtet sind, dass sie entlang einer nach außen weisenden Oberseite der Förderer (16) angeordnet sind.

14. Gruppiereinrichtung nach Anspruch 12 oder 13, wobei der zu fördernde Gegenstand (G) als ein aus mehreren Einzelprodukten (P) bestehender Stapel (2.04; 3.04; 5; G) ausgebildet ist und diese Einzelprodukte (P; 6) an einer Aufnahmestation (14) zwischen ein Mitnehmerpaar (2') eines Förderers (1a) einstapelbar sind, wobei die Geschwindigkeit des mit der Aufnahmestation (14) im Eingriff stehenden Förderers (1 a) auf die Geschwindigkeit des Einstapelvorganges in der Aufnahmestation (14) abgestimmt ist.

15. Gruppiereinrichtung nach einem der Ansprüche 12 bis 14, wobei der zu fördernde Gegenstand (2.04; 3.04; 5; G) an einer Übergabestation (16) aus dem Mitnehmerpaar (6') eines Förderers (16) entnehmbar ist, wobei die Geschwindigkeit des mit der Übergabestation (16) im Eingriff stehenden Förderers (1b) auf die Geschwindigkeit des Entnahmevorganges in der Übergabestation (16) abstimmbar ist.

16. Gruppiereinrichtung nach einem der Ansprüche 12 bis 15, wobei als Förderer vorzugsweise drei nebeneinander angeordnete, schlaufenförmig umlaufende Riemen (1 a, 1 b, 1 c) vorgesehen sind, die jeweils mit vorzugsweise drei in Förderrichtung gleichmäßig beabstandeten Mitnehmerpaaren (2', 3', 4', 5', 6', 7', 8', 9', 10') verbunden sind, wobei die Mitnehmerpaare (2', 3', 4', 5', 6', 7', 8', 9', 10') so ausgerichtet sind, dass sie fluchtend hintereinander oberhalb des mittleren der drei Riemen (1 b) angeordnet sind, und wobei die drei Antriebseinheiten (11, 12, 13) so steuerbar sind, dass während der erste Riemen (1a) mit einem seiner Mitnehmerpaare (2) mit einer Aufnahmestation (14) zur Beladung mit einem Gegenstand (2.04; 3.04; 5; G) im Eingriff steht, vorzugsweise der zweite Riemen (1 b) mit einem seiner Mitnehmerpaare (6) mit einer Übergabestation (16) zur Entladung eines Gegenstandes (2.04; 3.04; 5; G) im Eingriff steht und vorzugsweise der dritte Riemen (1c) mit keinem seiner Mitnehmerpaare (8, 9, 10) mit einer der beiden Stationen (14, 16) im Eingriff steht.

17. Verpackungsmaschine mit einer Produktabgabeeinheit, insbesondere einem um eine starre Rotationsachse drehbaren Wendekopf (1; 35), zum Anstapeln verpackter Einzelartikel (2.04; 3.04; 5; G) in Verbindung mit einer Gruppiereinrichtung (2; 1') nach einem der vorhergehenden Ansprüche 6 bis 16 zur Verbindung mit einem Stangenpacker.

18. Verpackungsmaschine nach Anspruch 17, insbesondere zur Durchführung des Verfahrens nach einem der Ansprüche 1 bis 5 mit zwei Fördervorrichtungen (21, 22), die derart zueinander angeordnet sind, dass die Förderer (21a, 21b, 22a, 22b) der beiden Fördervorrichtungen (21, 22) sich jeweils in einem einen Förderspalt (18) bildenden Abstand gegenüberliegen und die Antriebseinheiten (23, 24, 25, 26) der einander gegenüberliegenden Förderer (21 a, 21 b, 22a, 22b) so zueinander synchronisiert sind, dass der zu fördernde Gegenstand (G) jeweils zwischen einander gegenüberliegenden Mitnehmerpaaren (27, 31; 29, 33) der beiden Fördervorrichtungen (21, 22) aufnehmbar und im Förderspalt (18) weitertransportierbar ist.

19. Verpackungsmaschine nach Anspruch 17 oder 18, wobei im Förderspalt (18) eine Gleitschiene (19) angeordnet ist, auf der der zu fördernde Gegenstand (G) verschiebbar aufliegt, insbesondere die Gleitschiene (19) ihrerseits als Längsfördereinrichtung, vorzugsweise bestehend aus einem umlaufenden, angetriebenen Förderband oder einer Förderkette ausgebildet ist, wobei zwischen den Mitnehmern Mitnehmerabteilungen, die insbesondere variabel sind, zur Aufnahme und zum Transport von Produkt- bzw. Artikelstangen aus einer Mehrzahl von Einzelprodukten oder Einzelartikeln innerhalb der Abteilungen vorgesehen sind.

20. Verpackungsmaschinenlinie mit einer verketteten Mehrzahl von Verpackungsmaschinen, wobei zumindest eine der Mehrzahl von Verpackungsmaschinen eine Verpackungsmaschine nach einem der Ansprüche 17 bis 19 ist.

## Claims

1. Method for forming article bars (2.04; 3.04; 5; G) from individual articles (P; 6), particularly for bar packages, wherein isolated, preferably packaged articles (P; 6) are transferred from a discharge device (1; 35) to an article-bar forming device (2; 1') in which a predetermined number of individual articles (P; 6) are grouped into an article bar (2.04; 3.04; 5; G) and said article bar (2.04; 3.04; 5, G) is transferred to a transfer device (3; 20) to a longitudinal bar conveyor (4; 36), wherein in response to a beginning of the provision of a predetermined number of individual articles (6; P) and/or to a period which is needed or available for grouping the predetermined number of individual articles (6; P) into an article bar (2.04; 3.04; 5; G), a plurality of article-bar formers (2, 2b, 2c; 1 a, 1 b, 1 c) of the article-bar forming device (2; 1') are controlled separately and independently of one another for grouping the individual articles (P; 6) into an article bar (2.04; 3.04; 5; G) and for transferring the article bar (2.04; 3.04; 5; G) to the transfer device (3; 20), **characterized in that** the transfer device (3; 20) consists of a plurality of individual transfer conveyors (3.11, 3.21, 3.31; 21a, 21b, 22a, 22b) which are controllable independently of one another, wherein the number of the transfer conveyors (3.11, 3.21, 3.31; 21 a, 21 b, 22a, 22b) corresponds to the number of the article-bar formers (2a, 2b, 2c; 1 a, 1 b, 1 c) of the article-bar forming device (2; 1').

2. Method according to claim 1, wherein the article-bar formers (2a, 2b, 2c; 1 a, 1 b, 1 c) of the article-bar forming device receive the individual articles (2.04; 3.04; 5; G) in a corresponding transfer or receiving position (2.01, 2.03; 3.03).

3. Method according to claim 1 or 2, wherein the individual articles (P; 6) are provided by a turning head (1; 35) of a continuous packaging machine in a defined transfer position, the individual articles (P; 6) are received in a predetermined number by an article-bar former (2a, 2b, 2c) of an article-bar forming device, which is preferably configured as a grouping wheel (2), and are transferred to the transfer device (3) and transferred by said device preferably equidistantly to a supply chain or a longitudinal supply conveyor (4) of a collective packaging machine, particularly a flowpack machine.

4. Method according to one of the preceding claims 1 to 3, wherein distances between article bars (2.04; 3.04; 5; G) are variably adjustable, and article bars (2.04; 3.04, 5; G) can be transferred continuously or discontinuously to a downstream conveying device or packaging machine or packaging route, respectively, and an intelligent stacking takes place in the article-bar forming device (2; 1'), preferably a grouping wheel (2) comprising a plurality of article-bar formers (2a, 2b, 2c), and article bars (2.04; 3.04, 5; G) that are always complete and contain a predetermined number of individual articles (P; 6) are formed, independently of preceding empty cycles in the packaging process.

5. Method according to one of the preceding claims 1 to 4, wherein the transfer device (3; 20) has arranged downstream thereof a bar packer, preferably with interposition of a longitudinal conveyor (4; 36), for packaging the article bars (2.04; 3.04; 5; G) in a secondary packaging, e.g. in fold wrap, fin seal or a flowpack packaging.

6. Grouping device for small-sized articles (P; 6) particularly packed in individual packages, for forming article bars (2.04; 3.04; 5; G) preferably for supply to a bar packaging machine, particularly for performing the method according to at least one of the preceding claims 1 to 5 with a revolving article-bar forming device (2; 1') and a linear bar transfer device (3; 20) for connection to a longitudinal bar conveyor (4; 36), wherein isolated, preferably packaged articles (P; 6) are transferred from a discharge device (1; 35) to the article-bar forming device (2; 1'), in which a predetermined number of individual articles (P; 6) are grouped into an article bar (2.04; 3.04; 5; G) and said article bar (2.04; 3.04; 5; G) is transferred to the transfer device (3; 20) to the longitudinal bar conveyor (4; 36), wherein in response to a beginning of the provision of a predetermined number of individual articles (P; 6) and/or to a period which is needed or available for grouping the predetermined number of individual articles (P; 6) into an article bar (2.04; 3.04; 5; G), a plurality of article-bar formers (2a, 2b, 2c; 1 a, 1 b, 1 c) of the article-bar forming device (2; 1') are controlled separately and independently of one another for grouping the individual articles (P; 6) into an article bar (2.04; 3.04; 5; G) and for transferring the article bar (2.04; 3.04; 5; G) to the transfer device (3; 20), **characterized in that** the transfer device (3; 20) consists of a plurality of individual transfer conveyors (3.11, 3.21, 3.31; 21 a, 21 b, 22a, 22b) which are controllable independently of one another, wherein the number of the transfer conveyors (3.11, 3.21, 3.31; 21 a, 21 b, 22a, 22b) corresponds to the number of the article-bar formers (2a, 2b, 2c; 1 a, 1 b, 1 c) of the article-bar forming device (2; 1').

7. Grouping device according to claim 6, wherein the article-bar forming device is a grouping wheel (2).

8. Grouping device according to claim 6 or 7, wherein the grouping wheel (2) comprises a plurality of coaxial, independent grouping wheel segments (2a, 2b, 2c or 2.11, 2.21, 2.31, respectively), wherein each grouping wheel segment (2a, 2b, 2c or 2.11, 2.21, 2.31, respectively) is controllable preferably independently and comprises at least one pocket (1.1; 2.1; 3.1) for receiving articles (P; 6), preferably the pocket (1.1; 2.1; 3.1) corresponds in its length substantially to the length of an article bar (2.04; 3.04; 5; G) of individual articles (P; 6).

9. Grouping device according to claim 8, wherein the grouping wheel segments (2a, 2b, 2c or 2.11, 2.21, 2.31, respectively) are arranged to be axially parallel, preferably coaxial to a rotation about parallel rotation axes or a coaxial common rotation axis, preferably are arranged by way of corresponding hub sections independently of one another and are arranged to be individually rotatable and drivable, particularly each grouping wheel segment (2a, 2b, 2c) comprises opposing web sections radially extending from a hub section, the radially exterior end of which is provided with a pocket (1.1; 2.1; 3.1) extending in circumferential direction, wherein preferably the grouping wheel segments (2a, 2b, 2c) are each rotatable individually intermittently or continuously, preferably at an accelerated pace, and the pockets (1.1; 2.1; 3.1) of the grouping wheel segments (2a, 2b, 2c) are preferably arranged in a common rotation plane.

10. Grouping device according to claim 9, wherein a section of the common rotation plane is formed by a tube-like guide channel (40) of a particularly U-profile-shaped cross section which extends between an article receiving position (14) of the grouping wheel (2) and an article discharge position (16), and/or the pockets (1.1; 2.1; 3.1) have a form that is U-shaped in circumferential direction.

11. Grouping device according to one of the preceding claims 6 to 10, wherein the transfer device (3; 20) between article-bar formers (2a, 2b, 2c; 1 a, 1 b, 1 c) and article-bar longitudinal conveyor (4; 36) consists of a pair of oppositely arranged belt conveyors (3; 20), of which each consists of a number of timing belts or chains (3.11, 3.21, 3.31; 21 a, 21 b, 22a, 22b) corresponding to the number of the grouping wheel segments (2a, 2b, 2c), preferably the timing belts comprise entrainers (3.11, 3.21, 3.31; 21 a, 21 b, 22a, 22b) for forming preferably constant belt pockets for receiving article bars (2.04; 3.04; 5; G), for transfer to a longitudinal bar conveyor (4; 36).

12. Grouping device according to one of the preceding claims 6 to 11 with at least two parallel conveyors (1 a, 1 b, 1 c) that are moving the item to be conveyed or the article (2.04; 3.04; 5; G), wherein each conveyor (1a, 1b, 1c) is connected to at least one, preferably a pair of mutually spaced-apart entrainers (2', 3', 4', 5', 6', 7', 8', 9', 10'), between which the item to be conveyed, particularly an article stack (2.04; 3.04; 5; G), is receivable, wherein each conveyor (1 a, 1 b, 1 c) is connected to a separate drive unit (11, 12, 13) and the drive units (11, 12, 13) are controllable independently of one another, so that the conveyors (1 a, 1 b, 1 c) and/or the entrainers (2', 3', 4', 5', 6', 7', 8', 8', 10') and/or the entrainer pairs of the various conveyors (1a, 1b, 1c) are shiftable relative to one another.

13. Grouping device according to claim 12, wherein the conveyor (2a, 2b, 2c, 1 a, 1 b, 1 c) is configured as a belt, as a chain or as a rotating disk or wheel, preferably the entrainers (2', 3', 4', 5', 6', 7', 8', 9', 10') of the various conveyors (1a, 1b, 1c) are oriented in conveying direction in alignment lying in a plane, so that the items (2.04; 3,04; 5; G) to be conveyed or the articles are conveyed along a common conveyor path, particularly the pairs of entrainers (2', 3', 4', 5', 6', 7', 8', 9', 10') are oriented such that they are arranged along an outwardly oriented upper side of the conveyors (16).

14. Grouping device according to claim 12 or 13, wherein the item (G) to be conveyed is formed as a stack (2.04; 3.04; 5; G) consisting of plural individual products (P), and said individual products (P; 6) can be stacked at a receiving station (14) between a pair of entrainers (2') of a conveyor (1 a), wherein the speed of the conveyor (1 a) engaged with the receiving station (14) is tuned to the speed of the stacking process in the receiving station (14).

15. Grouping device according to one of claims 12 to 14, wherein the item (2.04; 3.04; 5; G) to be conveyed can be removed at a transfer station (16) from the pair of entrainers (6') of a conveyor (16), wherein the speed of the conveyor (1 b) engaged with the transfer station (16) can be tuned to the speed of the removal process in the transfer station (16).

16. Grouping device according to one of claims 12 to 15, wherein preferably three juxtaposed belts (1 a, 1 b, 1 c) revolving in the form of a loop are provided as conveyors, which are each connected to preferably three pairs of entrainers (2', 3', 4', 5', 6', 7'. 8', 9', 10') that are equally spaced apart in conveying direction, wherein the pairs of conveyors (2', 3', 4', 5', 6', 7', 8', 9', 10') are oriented such that they are arranged in alignment one after the other above the middle one of the three belts (1b), and wherein the three drive units (11, 12, 13) are controllable such that while the first belt (1a) with one of its entrainer pairs (2) is in engagement with a receiving station (14) for loading with an item (2.04; 3.04; 5; G), preferably the second belt (1 b) with one of its entrainer pairs (6) is in engagement with a transfer station (16) for unloading an item (2.04; 3.04; 5; G), and preferably the third belt (1c) with none of its entrainer pairs (8, 9, 10) is in engagement with one of the two stations (14, 16).

17. Packaging machine with a product discharge unit, particularly a turning head (1; 35) which is rotatable about a rigid rotation axis, for stacking packed individual articles (2.04; 3.04; 5; G) in combination with a grouping device (2: 1') according to one of the preceding claims 6 to 16 for connection to a bar packer.

18. Packaging machine according to claim 17, particularly for performing the method according to one of claims 1 to 5 with two conveying devices (21, 22) that are arranged relative to each other such that the conveyors (21 a, 21 b, 22a, 22b) of the two conveying devices (21, 22) are opposite to each other at a distance forming a conveyor gap (18) and the drive units (23, 24, 25, 26) of the mutually opposing conveyors (21 a, 21 b, 22a, 22b) are synchronized relative to one another such that the item (G) to be conveyed is respectively receivable between mutually opposing entrainer pairs (27, 31; 29, 33) of the two conveying devices (21, 22) and is further transportable in the conveyor gap (18).

19. Packaging machine according to claim 17 or 18, wherein the conveyor gap (18) has arranged therein a slide rail (19) on which the item (G) to be conveyed is displaceably positioned, in particular the slide rail (19), in turn, is configured as a longitudinal conveyor, preferably consisting of a revolving, driven conveyor belt or a conveyor chain, that the entrainers have provided thereinbetween entrainer compartments, which are particularly variable, for receiving and transporting product or article bars consisting of a plurality of individual products or individual articles within the compartments.

20. Packaging machine line with a linked plurality of packaging machines, wherein at least one of the plurality of packaging machines is a packaging machine according to one of claims 17 to 19.

## Revendications

1. Procédé de formation de barrettes d'articles (2.04; 3.04; 5; G) constituées d'articles individuels (P; 6), notamment pour des emballages en barrettes,
d'après lequel des articles individuels (P; 6) séparés et de préférence emballés, sont transférés d'un dispositif de fourniture (1; 35) à un dispositif de formation de barrettes d'articles (2; 1') dans lequel un nombre prédéterminé d'articles individuels (P; 6) sont regroupés en une barrette d'articles (2.04; 3.04; 5; G) et cette barrette d'articles (2.04; 3.04; 5; G) est transférée à un dispositif de transfert (3; 20) vers un dispositif de transport longitudinal de barrettes (4; 36),
et d'après lequel, en fonction d'un début de la fourniture d'un nombre prédéterminé d'articles individuels (P; 6), et/ou d'un intervalle de temps nécessaire ou disponible au regroupement dudit nombre prédéterminé d'articles individuels (P; 6) en une barrette d'articles (2.04; 3.04; 5; G), une pluralité de modules de formation de barrettes d'articles (2a, 2b, 2c; 1a, 1b, 1c) du dispositif de formation de barrettes d'articles (2; 1') sont commandés séparément et indépendamment les uns des autres, pour le regroupement des articles individuels (P; 6) en barrettes d'articles (2.04; 3.04; 5; G) et pour le transfert de la barrette d'articles (2.04; 3.04; 5; G) au dispositif de transfert (3; 20),
**caractérisé en ce que** le dispositif de transfert (3; 20) est constitué d'une pluralité de transporteurs de transfert (3.11, 3.21, 3.31; 21a, 21b, 22a, 22b) individuels pouvant être commandés indépendamment les uns des autres, le nombre des transporteurs de transfert (3.11, 3.21, 3.31; 21a, 21b, 22a, 22b) correspondant au nombre des modules de formation de barrettes d'articles (2a, 2b, 2c; 1a, 1b, 1c) du dispositif de formation de barrettes d'articles (2; 1').

2. Procédé selon la revendication 1, d'après lequel les modules de formation de barrettes d'articles (2a, 2b, 2c; 1a, 1b, 1c) du dispositif de formation de barrettes d'articles reçoivent les articles individuels (2.04; 3.04; 5; G) dans une position de transfert ou de réception (2.01, 2.03; 3.03) concordante.

3. Procédé selon la revendication 1 ou la revendication 2, d'après lequel les articles individuels (P; 6) sont fournis par une tête de rotation (1; 35) d'une machine d'emballage continu, dans une position de transfert définie, les articles individuels (P; 6) sont reçus, selon un nombre prédéterminé, par un module de formation de barrettes d'articles (2a, 2b, 2c) d'un dispositif de formation de barrettes d'articles de préférence réalisé sous la forme d'une roue de regroupement (2), et transférés au dispositif de transfert (3), et transférés par celui-ci, de préférence de manière équidistante, à une chaîne d'alimentation ou à un transporteur longitudinal d'alimentation (4) d'une machine d'emballage de groupage, notamment une machine d'emballage du type flow pack, à savoir enveloppeuse à soudage en continu.

4. Procédé selon l'une des revendications 1 à 3, d'après lequel des distances entre des barrettes d'articles (2.04; 3.04; 5; G) peuvent être réglées de manière variable, et un transfert continu ou discontinu de barrettes d'articles (2.04; 3.04; 5; G) peut être effectué vers un dispositif de transport ou une machine d'emballage ou un parcours d'emballage situés en aval, et un empilement intelligent est effectué dans le dispositif de formation de barrettes d'articles (2; 1'), de préférence une roue de regroupement (2) présentant plusieurs modules de formation de barrettes d'articles (2a, 2b, 2c), et des barrettes d'articles (2.04; 3.04; 5; G) toujours complètes et renfermant un nombre prédéterminé d'articles individuels (P; 6) sont formées indépendamment de cycles à vide précédents dans le processus d'emballage.

5. Procédé selon l'une des revendications 1 à 4, d'après lequel en aval du dispositif de transfert (3; 20) est placé, de préférence avec interposition d'un dispositif de transport longitudinal (4; 36), un dispositif d'emballage de barrettes, pour emballer les barrettes d'articles (2.04; 3.04; 5; G) dans un deuxième emballage, comme par exemple une enveloppe pliée, un emballage à joint scellé replié (fin seal) ou un emballage du type flow pack.

6. Dispositif de regroupement pour des articles de petite taille (P; 6), notamment emballés en emballages individuels, en vue de former des barrettes d'articles (2.04; 3.04; 5; G), de préférence pour l'amenée à une machine d'emballage de barrettes, notamment pour la mise en oeuvre du procédé selon l'une au moins des revendications précédentes 1 à 5, le dispositif de regroupement comprenant un dispositif de formation de barrettes d'articles (2; 1') en révolution et un dispositif de transfert de barrettes (3; 20) linéaire pour la liaison avec un dispositif de transport longitudinal de barrettes (4; 36), dispositif de regroupement
dans lequel des articles individuels (P; 6) séparés et de préférence emballés, sont transférés d'un dispositif de fourniture (1; 35) au dispositif de formation de barrettes d'articles (2; 1') dans lequel un nombre prédéterminé d'articles individuels (P; 6) sont regroupés en une barrette d'articles (2.04; 3.04; 5; G) et cette barrette d'articles (2.04; 3.04; 5; G) est transférée au dispositif de transfert (3; 20) vers le dispositif de transport longitudinal de barrettes (4; 36),
et dans lequel, en fonction d'un début de la fourniture d'un nombre prédéterminé d'articles individuels (P; 6), et/ou d'un intervalle de temps nécessaire ou disponible au regroupement dudit nombre prédéterminé d'articles individuels (P; 6) en une barrette d'articles (2.04; 3.04; 5; G), une pluralité de modules de formation de barrettes d'articles (2a, 2b, 2c; 1a, 1b, 1c) du dispositif de formation de barrettes d'articles (2; 1') sont commandés séparément et indépendamment les uns des autres, pour le regroupement des articles individuels (P; 6) en barrettes d'articles (2.04; 3.04; 5; G) et pour le transfert de la barrette d'articles (2.04; 3.04; 5; G) au dispositif de transfert (3; 20),
**caractérisé en ce que** le dispositif de transfert (3; 20) est constitué d'une pluralité de transporteurs de transfert (3.11, 3.21, 3.31; 21a, 21b, 22a, 22b) individuels pouvant être commandés indépendamment les uns des autres, le nombre des transporteurs de transfert (3.11, 3.21, 3.31; 21a, 21b, 22a, 22b) correspondant au nombre des modules de formation de barrettes d'articles (2a, 2b, 2c; 1a, 1b, 1c) du dispositif de formation de barrettes d'articles (2; 1').

7. Dispositif de regroupement selon la revendication 6, dans lequel le dispositif de formation de barrette d'articles est une roue de regroupement (2).

8. Dispositif de regroupement selon la revendication 6 ou la revendication 7, dans lequel la roue de regroupement (2) présente une pluralité de segments de roue de regroupement (2a, 2b, 2c respectivement 2.11, 2.21, 2.31) indépendants et coaxiaux, chaque segment de roue de regroupement (2a, 2b, 2c respectivement 2.11, 2.21, 2.31) pouvant de préférence être commandé de manière indépendante et présentant au moins une alvéole (1.1, 2.1, 3.1) destinée à recevoir des articles (P; 6), l'alvéole (1.1, 2.1, 3.1) correspondant de préférence, quant à sa longueur, sensiblement à la longueur d'une barrette d'articles (2.04; 3.04; 5; G) composée d'articles individuels (P; 6).

9. Dispositif de regroupement selon la revendication 8, dans lequel les segments de roue de regroupement (2a, 2b, 2c respectivement 2.11, 2.21, 2.31) sont agencés avec leurs axes mutuellement parallèles, de préférence coaxialement à une rotation autour d'axes de rotation parallèles ou d'un axe de rotation commun coaxial, et peuvent tourner et être entraînés individuellement et indépendamment les uns des autres, de préférence par des tronçons de moyeu correspondants, chaque segment de roue de regroupement (2a, 2b, 2c) présentant notamment des tronçons de branche mutuellement opposés, s'étendant radialement à partir d'un tronçon de moyeu et dont l'extrémité située radialement à l'extérieur est pourvue d'une alvéole (1.1, 2.1, 3.1) s'étendant dans la direction périphérique, dispositif de regroupement dans lequel de préférence les segments de roue de regroupement (2a, 2b, 2c) peuvent tourner chacun individuellement de manière intermittente ou continue, de préférence de manière accélérée, et les alvéoles (1.1, 2.1, 3.1) des segments de roue de regroupement (2a, 2b, 2c) sont de préférence agencées dans un plan de rotation commun.

10. Dispositif de regroupement selon la revendication 9, dans lequel un tronçon du plan de rotation commun est formé par un canal de guidage (40) de forme tubulaire, notamment de section transversale en forme de profilé en U, qui s'étend entre une position de réception d'articles (14) de la roue de regroupement (2) et une position de distribution d'articles (16), et/ou les alvéoles (1.1, 2.1, 3.1) présentent une configuration en forme de U dans la direction périphérique.

11. Dispositif de regroupement selon l'une des revendications précédentes 6 à 10, dans lequel le dispositif de transfert (3; 20) est constitué, entre des modules de formation de barrettes d'articles (2a, 2b, 2c; 1a, 1b, 1c) et le dispositif de transport longitudinal de barrettes (4; 36), d'une paire de transporteurs à bande (3; 20) agencés en opposition, dont chacun est constitué d'un nombre de courroies ou de chaines de séquencement (3.11, 3.21, 3.31; 21a, 21b, 22a, 22b) correspondant au nombre de segments de roue de regroupement (2a, 2b, 2c), les courroies de séquencement présentant de préférence des entraîneurs (3.11, 3.21, 3.31; 21a, 21b, 22a, 22b) pour former des alvéoles de courroie, de préférence constantes, pour la réception de barrettes d'articles (2.04; 3.04; 5; G), en vue du transfert à un dispositif de transport longitudinal de barrettes (4; 36).

12. Dispositif de regroupement (1) selon l'une des revendications précédentes 6 à 11, comprenant au moins deux transporteurs (1a, 1b, 1c) parallèles déplaçant l'objet à transporter ou les articles (2.04; 3.04; 5; G), dans lequel chaque transporteur (1a, 1b, 1c) est relié à au moins un, de préférence à une paire d'entraîneurs (2', 3', 4', 5', 6', 7', 8', 9', 10') agencés de manière mutuellement espacée, entre lesquels peut être reçu l'objet à transporter, notamment la pile d'articles (2.04; 3.04; 5; G), et dans lequel chaque transporteur (1a, 1b, 1c) est relié à une unité d'entraînement séparée (11, 12, 13) et les unités d'entraînement (11, 12, 13) peuvent être commandées indépendamment les unes des autres, de sorte que les transporteurs (1a, 1b, 1c) et ou les entraineurs (2', 3', 4', 5', 6', 7', 8', 9', 10') et/ou paires d'entraîneurs des différents transporteurs (1a, 1b, 1c) peuvent être déplacés les uns par rapport aux autres.

13. Dispositif de regroupement selon la revendication 12, dans lequel le transporteur (2a, 2b, 2c, 1a, 1b, 1c) est réalisé sous forme de courroie, de chaîne ou sous forme de disque rotatif ou de roue, et dans lequel les entraîneurs (2', 3', 4', 5', 6', 7', 8', 9', 10') des différents transporteurs (1a, 1b, 1c) sont de préférence situés dans un plan aligné avec la direction de transport, de sorte que les objets à transporter (2.04; 3.04; 5; G) ou les articles sont transportés le long d'une voie de transport commune, les paires d'entraîneurs (2', 3', 4', 5', 6', 7', 8', 9', 10') étant notamment orientées de manière à être agencées le long d'un côté des transporteurs (16), dirigé vers l'extérieur.

14. Dispositif de regroupement selon la revendication 12 ou la revendication 13, dans lequel l'objet à transporter (G) est constitué par une pile (2.04; 3.04; 5; G) constituée de plusieurs produits individuels (P), et ces produits individuels (P; 6) peuvent être empilés, au niveau d'un poste de réception (14), entre une paire d'entraîneurs (2') d'un transporteur (la), la vitesse du transporteur (la) en prise avec le poste de réception (14), étant synchronisée avec la vitesse de l'opération d'empilement dans le poste de réception (14).

15. Dispositif de regroupement selon l'une des revendications 12 à 14, dans lequel l'objet à transporter (2.04; 3.04; 5; G) peut, au niveau d'un poste de transfert (16), être prélevé hors de la paire d'entraîneurs (6') d'un transporteur (16), la vitesse du transporteur (1b) en prise avec le poste de transfert (16), étant synchronisée avec la vitesse de l'opération de prélèvement dans le poste de transfert (16).

16. Dispositif de regroupement selon l'une des revendications 12 à 15, dans lequel sont prévues, en guise de transporteur, trois courroies (1a, 1b, 1c) agencées côte à côte et en révolution sous forme de boucle, qui sont reliées respectivement de préférence avec trois paires d'entraîneurs (2', 3', 4', 5', 6', 7', 8', 9', 10') espacées de manière régulière dans la direction de transport, dans lequel les paires d'entraîneurs (2', 3', 4', 5', 6', 7', 8', 9', 10') sont orientées de façon à être agencées de manière alignée les unes derrière les autres au-dessus de celle centrale des trois courroies (1b), et dans lequel les trois unités d'entrainement (11, 12, 13) peuvent être commandées de manière telle, que pendant que la première courroie (la) est en prise, au moyen de l'une de ses paires d'entraîneurs (2), avec un poste de réception (14) pour le chargement avec un objet (2.04; 3.04; 5; G), de préférence la deuxième courroie (1b) soit en prise, au moyen d'une de ses paires d'entraîneurs (6), avec un poste de transfert (16) pour le déchargement d'un objet (2.04; 3.04; 5; G), et de préférence la troisième courroie (1c) ne soit pas en prise, au moyen d'aucune de ses paires d'entraîneurs (8, 9, 10), avec l'un des deux postes (14, 16).

17. Machine d'emballage comprenant une unité de fourniture de produits, notamment une tête de rotation (1; 35) pouvant tourner autour d'un axe de rotation fixe, pour empiler des articles individuels (2.04; 3.04; 5; G), en combinaison avec un dispositif de regroupement (2; 1') selon l'une des revendications précédentes 6 à 16 pour assurer la liaison avec un emballeur de barrettes.

18. Machine d'emballage selon la revendication 17, notamment pour la mise en oeuvre du procédé selon l'une des revendications 1 à 5, comprenant deux dispositifs de transport (21, 22), qui sont agencés de manière telle l'un par rapport à l'autre, que les transporteurs (21a, 21b, 22a, 22b) des deux dispositifs de transport (21, 22) soient en opposition à une distance formant un interstice de transport (18), et les unités d'entraînement (23, 24, 25, 26) des transporteurs (21a, 21b, 22a, 22b) mutuellement en opposition étant synchronisées réciproquement de manière à ce que l'objet (G) à transporter puisse être reçu respectivement entre des paires d'entraîneurs (27, 31; 29, 33) mutuellement opposés des deux dispositifs de transport (21, 22), et être transporté plus loin, dans l'interstice de transport (18).

19. Machine d'emballage selon la revendication 17 ou la revendication 18, dans laquelle à l'intérieur de l'interstice de transport (18) est agencé un rail de glissement (19) sur lequel repose de manière coulissante l'objet (G) à transporter, et dans laquelle notamment le rail de glissement (19) est pour sa part réalisé en tant que dispositif de transport longitudinal, de préférence constitué d'une bande de transport ou d'une chaîne de transport entraînée en révolution, et dans laquelle entre les entraîneurs sont prévues des sections d'entraîneurs, qui sont notamment variables, et destinées à recevoir et transporter des barrettes de produits ou d'articles constituées d'une pluralité de produits individuels ou d'articles individuels à l'intérieur des sections.

20. Ligne de machines d'emballage comprenant une pluralité de machines d'emballage interconnectées, dans laquelle l'une au moins de ladite pluralité de machines d'emballage est une machine d'emballage selon l'une des revendications 17 à 19.
